# EUROPEAN PATENT SPECIFICATION

(11) **EP 3 711 439 B1**
(45) Date of publication and mention of the grant of the patent: **11.10.2023**
(21) Application number: 18878418.5
(22) Date of filing: 30.10.2018
(51) Int. Cl.: H04W 74/08, H04W 72/02, H04W 72/04

(54) **IMPROVEMENTS RELATED TO RANDOM ACCESS IN WIRELESS COMMUNICATIONS**
VERBESSERUNGEN IM ZUSAMMENHANG MIT DEM DIREKTZUGRIFF IN DRAHTLOSEN KOMMUNIKATIONEN
AMÉLIORATIONS ASSOCIÉES À UN ACCÈS ALÉATOIRE DANS DES COMMUNICATIONS SANS FIL

(30) Priority: 17.11.2017 US 201762587517 P
(43) Date of publication of application: 23.09.2020
(73) Proprietor: Telefonaktiebolaget LM Ericsson (publ), 164 83 Stockholm (SE)
(72) Inventor: DAHLMAN, Erik, 112 23 Stockholm (SE); PARKVALL, Stefan, 167 57 Bromma (SE); BALDEMAIR, Robert, 170 69 Solna (SE)
(74) Representative: Zacco Sweden AB
(86) International application number: PCT/SE2018/051114
(87) International publication number: WO 2019/098906

(56) References cited:
- EP-A1- 3 217 755
- US-A1- 2015 085 689
- US-A1- 2015 282 215
- ZTE Corporation; Sanechips: "Discussion on the RAN2 impacts with the BWP terminologies introduced in RAN1", 3GPP Draft R2-1712601, vol. RAN WG2, 16 November 2017 (2017-11-16), pages 1-8, XP051371179,

## Description

### TECHNICAL FIELD

The present disclosure relates to a method performed by a wireless device for receiving a random access response and to the corresponding wireless device.

### BACKGROUND

Modern wireless communication systems are constantly evolving. For example, the fifth generation of mobile telecommunications and wireless technology is not yet fully defined but in an advanced draft stage within 3GPP. 5G wireless access will be realized by the evolution of Long Term Evolution, LTE, for existing spectrum in combination with new radio access technologies that primarily target new spectrum. Due to the scarcity of available spectrum, spectrum located in very high frequency ranges (compared to the frequencies that have so far been used for wireless communication), such as 10 GHz and above, are planned to be utilized for future mobile communication systems. Thus, evolving to 5G includes work on a New Radio (NR) Access Technology (RAT), also known as 5G or next generation (NX). The NR air interface targets spectrum in the range from sub-1 GHz (below 1 GHz) up to 100 GHz with initial deployments expected in frequency bands not utilized by LTE. Some LTE terminology is used in this disclosure in a forward-looking sense, to include equivalent 5G entities or functionalities although a different term may be specified in 5G.

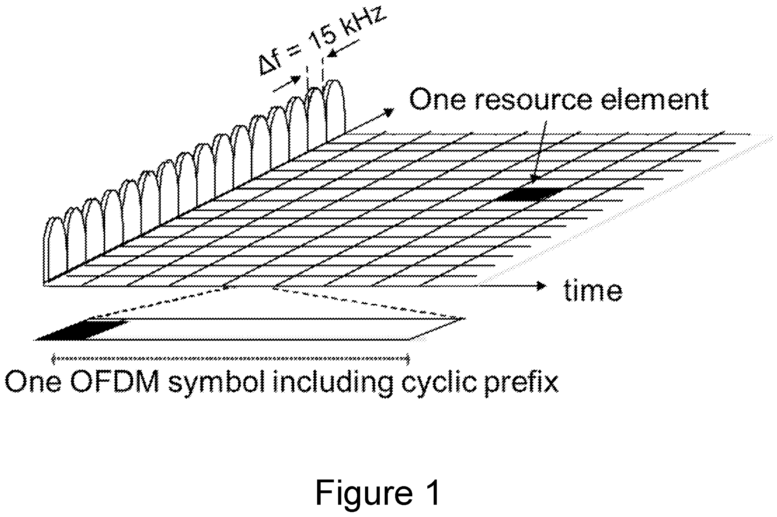

Physical resources for RATs used in wireless communication, such as LTE and NR, networks may be scheduled in time and frequency in what could be seen as a time and frequency grid comprising of time symbols in the time domain (e.g. orthogonal frequency division multiplexing, OFDM, symbols) and subcarriers in the frequency domain, as illustrated in Figure 1 for a subcarrier spacing of 15kHz. It should though be understood that there may be other applicable cases when the resources are not necessarily time-frequency resources, but may optionally involve resources in other domains such as the code domain. The new RAT NR will use a similar structure for the physical resources as LTE, using multiple carriers in frequency and symbols in the time domain, defining resource elements of physical resource blocks. The physical resource parameters may vary in NR. For example, the carriers may span a variable frequency range, the frequency subcarrier spacing (SCS) or density between the carriers may vary, as well as the cyclic prefix (CP) used. The frequency spacing between subcarriers can be seen as the frequency bandwidth between the center of a subcarrier and the adjacent subcarrier, or the bandwidth occupied by each subcarrier in the frequency band. Resource Allocation Unit in NR is similar to LTE case, but a few new units (e.g. REG bundle, CORESET) are introduced in NR. Basic definition of these units and relationship among these units are described in 38.211- 7.3.2.2.

Definitions in NR include the following:
Resource Element: This is same as in LTE. It is the smallest unit of the resource grid made up of one subcarrier in frequency domain and one OFDM symbol in time domain.

Resource Element Group (REG): One REG is made up of one resource block (12 resource element in frequency domain) and one OFDM symbol in time domain.

REG Bundle: One REG bundle is made up of multiple REGs.

Control Channel Element (CCE): A CEE is made up of 6 REG. The number REG bundles within a CCE varies.

Control Resource Set (CORESET): A CORESET is made up of multiples resource blocks (i.e. multiples of 12 REs) in frequency domain and '1 or 2 or 3' OFDM symbols in time domain. In a given CORESET different DCI formats or different search spaces can have different monitoring periodicities.

A numerology defines basic physical layer parameters, such as subframe structure and may include transmission bandwidth, subframe duration, frame duration, slot duration, symbol duration, subcarrier spacing, sampling frequency, number of subcarrier, RB per subframe, symbols per subframe, CP length etc. The exact values for the numerology elements in different RATs are typically driven by performance targets. For example, performance requirements impose constraints on usable subcarrier spacing sizes, e.g. the maximum acceptable phase noise sets the minimum subcarrier bandwidth while the slow decay of the spectrum (impacting filtering complexity and guardband sizes) favors smaller subcarrier bandwidth for a given carrier frequency, and the required cyclic prefix sets the maximum subcarrier bandwidth for a given carrier frequency to keep overhead low. However, the numerology used so far in the existing RATs (e.g. LTE) is rather static and typically can be trivially derived by the user equipment (UE) or wireless device, e.g., by one-to-one mapping to RAT, frequency band, service type (e.g., Multimedia Broadcast Multicast Service (MBMS)), etc. In LTE downlink which is OFDM-based, the subcarrier spacing is 15 kHz for normal CP and 15 kHz and 7.5 kHz (i.e., the reduced carrier spacing) for extended CP, where the latter is allowed only for MBMS-dedicated carriers.

The support of multiple numerologies has been agreed for NR, which numerologies can be multiplexed in the frequency and/or time domain for the same or different UEs. Different numerologies may thus coexist on the same subcarrier. A numerology in NR may be defined by subcarrier spacing and CP overhead. Multiple subcarrier spacings can be derived by scaling a basic subcarrier spacing by an integer N. The numerology used can be selected independently of the frequency band although it is assumed not to use a very low subcarrier spacing at very high carrier frequencies. Flexible network and UE channel bandwidth is supported. Values for subcarrier bandwidths currently discussed include among others 3.75 kHz, 15kHz, 30 kHz, 60 kHz. The numerology-specific slot durations can then be determined in ms based on the subcarrier spacing: subcarrier spacing of (2^m^{∗}15)kHz, m being an integer, gives 1/2^m 0.5 ms for a slot that is 0.5 ms in the 15 kHz numerology. Thus, each numerology is related to an n value, and where n is a non-negative integer, the subcarrier spacing is defined as 15 kHz ^{∗} 2*ⁿ* for a numerology n. Each symbol length (including CP) of 15 kHz subcarrier spacing equals the sum of the corresponding 2n symbols of the scaled subcarrier spacing.

It has been proposed, and it is now actually part of NR, that the duration of the subframes in NR should always have a duration of 1ms, and that the transmission could be flexibly defined by using slots, the slots being proposed to contain 14 time symbols (symbols of a defined time duration), such as OFDM (DFTS-OFDM, Discrete Fourier Transform Spread OFDMA) or SC-FDMA. The use of so called "mini-slots" have also been proposed which could have a variable length (any duration of symbols) and start position, thus they could be located anywhere in the slots, and could be as short as one symbol long. In NR the transmission bandwidth of a single carrier transmitted by a network node (also known as gNB) may be larger than the UE bandwidth capability, or the configured receiver bandwidth of a connected device (such as UE). Each gNB may also transmit using different numerologies which are time division multiplexed (TDM) or frequency division multiplexed (FDM). Subcarrier spacings of at least up to 480 kHz are currently being discussed for NR (the highest discussed values correspond to millimeter-wave based technologies). It has further been agreed that multiple frequency/time portions using different numerologies share a synchronization signal, where the synchronization signal refers to the signal itself and the time-frequency resource used to transmit the synchronization signal.

In the physical downlink control channel, PDCCH, region in DL radio frame, there can be many places where a specific PDCCH is located and UE searches all the possible locations. The possible location for a PDCCH differs depending on whether the PDCCH is UE-Specific or Common, and also depend on what aggregation level is used. All the possible location for PDCCH is called 'Search Space' and each of the possible location is called 'PDCCH Candidates'. The search space indicates the set of CCE locations where the UE may find its PDCCHs. Each PDCCH carries one DCI (downlink control information) and is identified by radio network temporary identifier, RNTI. The RNTI is implicitly encoded in the CRC (Cyclic Redundancy Check) attachment of the DCI. There are two types of search space: the common search space and the UE-specific search space. A UE is required to monitor both common and UE-specific search space. There might be overlap between common & UE-specific search spaces for a UE. The common search space would carry the DCls that are common for all UEs. For example, system information (using the SI-RNTI), paging (P-RNTI), PRACH responses (RA-RNTI), or UL TPC commands (TPC-PUCCH/PUSCH-RNTI). The UE monitors the common search space using aggregation level 4 and 8. The UE-specific search space can carry DCls for UE-specific allocations using the UE's assigned C-RNTI, semi-persistent scheduling (SPS C-RNTI), or initial allocation (temporary C-RNTI). The UE monitors the UE-specific search space at all aggregation levels (1, 2, 4, and 8). In NR, the time/freq. resource containing at least one search space is obtained from MIB/system information/implicitly derived from initial access information. Time/freq. resource containing additional search spaces, can be configured using dedicated RRC signaling. Multiple control resource sets can be overlapped in frequency and time for a UE. A search space in NR is associated with a single control resource set. The search spaces in different control resources sets are defined independently. The max number of BD candidates for a UE is defined independently of the number of control resource sets and the number of search spaces. In a given CORESET, two types of search spaces (e.g., UE-common search space and UE-specific search space) can have different periodicities for a UE to monitor. One set of the following parameters determines a set of search spaces: a set of aggregation levels, the number of PDCCH candidates for each aggregation level or PDCCH monitoring occasion for the set of search spaces. A PDCCH search space at an aggregation level in a CORESET is defined by a set of PDCCH candidates. For the search space at the highest aggregation level in the CORESET, the CCEs corresponding to a PDCCH candidate are derived as following: the first CCE index of a PDCCH candidate is identified by using at least some of the followings: (1) UE-ID, (2) candidate number, (3) total number of CCEs for the PDCCH candidate, (4) total number of CCEs in the CORESET, and (5) randomization factor. The other CCE indexes of the PDCCH candidate are consecutive from the first CCE index.

It has been agreed in NR to be able to configure only parts of the available carrier bandwidth using something called a bandwidth part (BWP). Typically, one or more such bandwidth parts could be configured to a UE, wherein only one is active, and the UE may then switch between these bandwidth parts, i.e. change which one is the active one. This is especially useful for devices that are not capable of handling the whole bandwidth of the carrier (limited capability devices). There could be an initial and/or default BWP, and the activation could be time based, switching back to the initial or default when the timed has timed out. For a UE, a configured DL (or UL) BWP may overlap in frequency domain with another configured DL (or UL) BWP in a serving cell. For each serving cell, the maximal number of DL/UL BWP configurations is: for paired spectrum: 4 DL BWPs and 4 UL BWPs, for unpaired spectrum: 4 DL/UL BWP pairs, and for supplementary uplink, SUL: 4 UL BWPs. For paired spectrum, support a dedicated timer for timer-based active DL BWP switching to the default DL BWP. A UE starts the timer when it switches its active DL BWP to a DL BWP other than the default DL BWP. A UE restarts the timer to the initial value when it successfully decodes a DCI to schedule physical downlink shared channel(s), PDSCH(s), in its active DL BWP. A UE switches its active DL BWP to the default DL BWP when the timer expires. Each bandwidth part is associated with a specific numerology (sub-carrier spacing, CP type). UE expects at least one DL bandwidth part and one UL bandwidth part being active among the set of configured bandwidth parts for a given time instant. A UE is only assumed to receive/transmit within active DL/UL bandwidth part(s) using the associated numerology, at least for PDSCH and/or PDCCH for DL and PUCCH (physical uplink control channel) and/or PUSCH (physical uplink shared channel) for UL. It is currently under discussion if multiple bandwidth parts with same or different numerologies can be active for a UE simultaneously. It does not imply that it is required for UE to support different numerologies at the same instance. The active DL/UL bandwidth part is not assumed to span a frequency range larger than the DL/UL bandwidth capability of the UE in a component carrier. It has been agreed to specify necessary mechanism to enable UE RF retuning for bandwidth part switching. In case of one active DL BWP for a given time instant, the configuration of a DL bandwidth part includes at least one CORESET. A UE can assume that PDSCH and corresponding PDCCH (PDCCH carrying scheduling assignment for the PDSCH) are transmitted within the same BWP if PDSCH transmission starts no later than K symbols after the end of the PDCCH transmission. In case of PDSCH transmission starting more than K symbols after the end of the corresponding PDCCH, PDCCH and PDSCH may be transmitted in different BWPs. For the indication of active DL/UL bandwidth part(s) to a UE, the following options are considered (including combinations thereof): Option #1: DCI (explicitly and/or implicitly), Option #2: MAC CE, Option #3: Time pattern (e.g. DRX like). In configuration of a BWP, a UE is configured with BWP in terms of PRBs (physical resource blocks). The offset between BWP and a reference point is implicitly or explicitly indicated to UE. Common PRB indexing is used at least for DL BWP configuration in RRC connected state, the reference point is PRB 0, which is common to all the UEs sharing a wideband CC from network perspective, regardless of whether they are NB, CA, or WB UEs. An offset from PRB 0 to the lowest PRB of the SS block accessed by the UE is configured by high layer signaling. The common PRB indexing is for maximum number of PRBs for a given numerology defined in Table 4.3.2-1 in 38.211.

The QCL configuration for PDCCH contains the information which provides a reference to a TCI state. Alt 1: The QCL configuration/indication is on a per CORESET basis. The UE applies the QCL assumption on the associated CORESET monitoring occasions. All search space(s) within the CORESET utilize the same QCL. Alt 2: The QCL configuration/indication is on a per search space basis. The UE applies the QCL assumption on an associated search space. This could mean that in the case where there are multiple search spaces within a CORESET, the UE may be configured with different QCL assumptions for different search spaces. Note: The indication of QCL configuration is done by RRC or RRC + MAC CE, and perhaps in the future DCI.

At least one of configured DL BWPs includes one CORESET with common search space at least in primary component carrier. Each configured DL BWP includes at least one CORESET with UE-specific search space for the case of single active BWP at a given time. In case of single active BWP at a given time, if active DL BWP does not include common search space, then UE is not required to monitor the common search space. In Pcell, for a UE, common search space for at least RACH procedure can be configured in each BWP. In a serving cell, for a UE, common search space for group-common PDCCH (e.g. SFI, pre-emption indication, etc.) can be configured in each BWP. Parameters related to UE Rx beam setting for monitoring NR-PDCCH on multiple beam pair links are configured by higher layer signaling or MAC CE and/or considered in the search space design.

### Cell search and synchronization

Before a wireless device, such as a user equipment (UE), can communicate with a network, for example an LTE or NR network, it must connect to the network. To access the network, the UE needs to find and acquire synchronization to a cell within the network and receive and decode information (cell system information) to be able to communicate and operate in the cell, a process referred to as cell search, wherein said cell is served by a network node (NN) or base station (BS), such as an evolved NodeB (eNB) in LTE or a gNodeB, gNB, in NR.

In LTE, for example, the eNB transmits two downlink (DL) synchronization signals (SS) on the physical broadcast channel (PBCH) to assist in the cell search/synchronization, the primary synchronization signal (PSS) and the secondary synchronization signal (SSS). The UE detects the synchronization signals broadcasted from the eNB for DL synchronization, the synchronization signals being transmitted in an a priori known frequency allocation. The UE detects the physical cell identity of the access node, which is encoded into the synchronization signals, and is then capable of using the cell specific reference signals (CRS) of the access node to estimate the channel or decode system information (SI). After synchronization, the UE may send an uplink (UL) signal to the system, either an uplink synchronization signal to achieve UL synchronization, or perform random access (RA) by transmitting a random-access message (a RA preamble) as a request to join the network. To be able to send the RA preamble, the UE must acquire information about how the physical random-access channel (PRACH) is multiplexed in the UL band, by listening to system information block (SIB) messages transmitted from the eNB. Typically, such a RA message should be sent a certain time after hearing the synchronization signal, which enables the eNB to know when to listen for the possible RA messages.

NR defines at least two types of synchronization signals NR-PSS, used at least for initial symbol boundary synchronization to the NR cell, and NR-SSS, used at least for detection of NR cell ID or at least part of NR cell ID. NR-SSS detection may typically be based on the fixed time/freq. relationship with NR-PSS resource position irrespective of duplex mode and beam operation type at least within a given frequency range and cyclic prefix (CP) overhead. NR further defines at least one common control signal as the broadcast channel: NR-PBCH (Physical broadcast channel). NR-PBCH decoding may be based on the fixed relationship with NR-PSS and/or NR-SSS resource position, irrespective of duplex mode used and beam operation type used, at least within a given frequency range and CP overhead. SS, SSS and/or PBCH may be transmitted within a synchronization signal referred to as an 'SS block'. One or multiple 'SS block(s)' may compose an 'SS burst'. One or multiple 'SS burst(s)' may compose an 'SS burst set'. The number of SS bursts within a SS burst set is finite.

### Random Access

It is a fundamental requirement for any cellular system that a UE/device can request a connection setup, a procedure referred to as Random Access (RA). The procedures of cell search and selection, receiving system several purposes or events in LTE. Besides initial access for establishing a radio link (UE moving from idle to connected mode), RA is also used for reestablishing a radio link after radio-link failure, handover, positioning, for establishing uplink synchronization for receiving UL/DL data when in connected mode and UL not currently synchronized and as a scheduling request if no dedicated scheduling request resources have been configured on PUCCH. Acquisition of uplink timing is a main objective of all these procedures. Further, when establishing an initial radio link, the RA-procedure also serves the purpose of assigning a unique identity, the C-RNTI (Cell Radio Network Temporary Identifier), to the UE/device.

The RA procedure can use either a contention-based or contention-free (non-contention based) scheme depending on the purpose. Contention-based protocols allows many users to use the same radio channel without pre-coordination. This is a situation where several UEs may access the same resource and, therefore, the possibility of collision between them. In Contention free mode, the eNB assigns distinct preamble to each UE and hence the concern for collision and other collision related issues are non-existent. E.g. during handover, a temporary valid preamble will be issued. It is dedicated to this UE. No contention resolution is needed as the preamble shall not be used by UEs which did not get assigned a dedicated preamble, i.e. randomly select one. Contention-free Random Access can be used in areas where low latency is required, such as handover and resumption of downlink traffic for UE. Here, dedicated signature is allocated to the UE on a per-need basis. Contention-free may be used in Handover, which comprises of two types: Intra-RAT, which is within one radio access technology (i.e. LTE -to-LTE from one eNB to another), and Inter-RAT, between radio access technologies e.g.: between LTE and GSM or 3G WCDMA, WIMAX or even wireless LAN. Contention-based random access can be used for all RA purposes mentioned above, while contention-free random access can only be used in some cases, e.g. for reestablishing uplink synchronization upon downlink data arrival, uplink synchronization of secondary component carriers, handover and positioning.

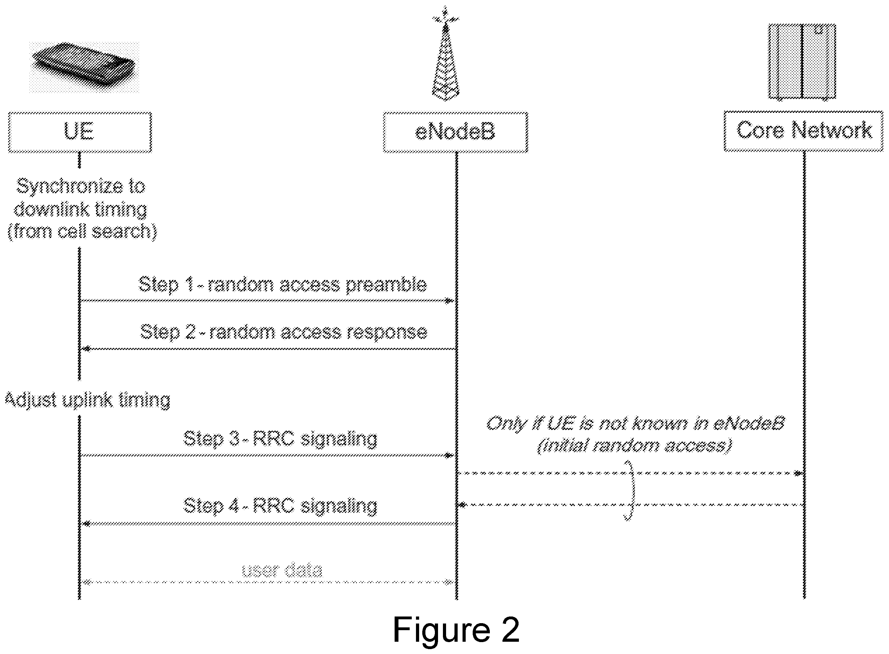

The basic procedure of contention based random access in e.g. LTE consists of a four-step procedure shown in Figure 2, comprising the random-access preamble transmission, the random-access response, the radio resource control (RRC) connection request and the medium access control (MAC) contention resolution. In the first step the UE or device selects and transmits a random-access preamble to the eNB, this message often being referred to as message 1 (Msg1). Based on correlation the NB may detect the access and furthermore can measure the timing of the UE transmission. In the second step, the eNB sends a random-access response (RAR) to the UE, this message being referred to as message 2 (Msg2). Message 1 allows the network to estimate the transmission timing of the UE, thus enabling for uplink synchronization. UL synchronization is necessary for the UE to be able to transmit UL data. In message 2 the eNB transmits a timing advance command to adjust the device transmit timing, based on the timing estimate obtained in step 1, and thus enabling UL synchronization. The eNB answers and the identity of the preamble that the eNB detected is included in the response message, and at this point a timing advance will be fixed. Information on the scheduled resource will be exchanged and a temporary C-RNTI will be assigned. Message 2 further assigns resources to the device to be used in the third step in the random-access procedure. The third step is an RRC signaling referred to as message 3 (Msg3), transmitted using the resources indicated in Msg2. Message 3 is the UE transmission of its UE identity to the network using the UL shared channel (UL-SCH) similarto normal scheduled data. The exact content of this signaling depends on the state of the UE, in particular whether it is previously known to the network or not. In case of idle state NAS info has to be provided (IMSI, TMSI) else the C-RNTI is used. The fourth step is the RRC Connection set-up, an RRC signaling from the eNB to the UE of a contention-resolution message, message 4 (Msg4), on the DL shared channel (DL-SCH). This step also resolves any contention due to multiple devices trying to access the system using the same random-access resource. Thus, contention resolution is performed, i.e. the eNB addresses the UE using the C-RNTI, which informs the UE if it "won" the contention. Only the first step uses physical-layer processing specifically designed for random access. The subsequent three steps utilize the same physical-layer processing as used for normal UL and DL data transmission. Only the first two steps mentioned above is used for contention-free random access, as there is no need for contention resolution in a contention-free scheme. Instead, another message comprising a RA preamble assignment, message 0, could be sent from the eNB to the UE before Msg1, in the case the eNB initiates the RA attempt, using RRC signaling or a physical downlink control channel (PDCCH) order. A PDCCH order is a specific message transmitted on the PDCCH, containing information about where to initiate the random-access procedure and, in case of contention-free random access, the preamble to use.

As mentioned above, in LTE upon receiving the preamble (Msg1), the eNB assigns a temporary cell RNTI (C-RNTI) and uplink and downlink resources for scheduling. Then, the eNB sends a random-access response (RAR, Msg2) over the downlink shared channel/ Physical Downlink Shared Channel (DL-SCH/PDSCH) for each UE. One DL-SCH can carry random access responses to multiple UEs. After the UE sends the preamble, it monitors the physical dedicated control channel (PDCCH) and waits for a random-access response within a random-access response window:
- If the UE receives a response that contains an RA-preamble identifier matching the transmitted random-access preamble, the response is successful.
- If the UE does not receive a response or fails to verify the response reception, the response fails. In this case, if the number of random access attempts is smaller than the maximum, the UE attempts random access again. Otherwise, random access fails. The maximum number of random access attempts of the UE can be obtained from SIB2.

Thus, the RAR is sent by the eNB on the Physical Downlink Shared Channel (PDSCH). It may be addressed with an ID, the Random-Access Radio Network Temporary Identifier (RA-RNTI), identifying the time-frequency slot in which the preamble was detected. If multiple UEs had collided by selecting the same signature in the same preamble time-frequency resource, they would both receive the same RAR.

It has been agreed in NR that a similar process will be used for random access as in LTE. From the physical layer perspective, the NR random access procedure encompasses the transmission of random access preamble (Msg1) in a PRACH, random access response (RAR) in a PDSCH (Msg2), Msg3 PUSCH, and Msg4 PDSCH. Even though the procedure will be similar to the one used for LTE, using similar messages, not all steps can be performed the same due to the characteristics of NR, such as flexible carrier frequencies and devices with different capabilities, and especially the use of BWPs in NR. Hence, there is a need to establish a functioning RA procedure for NR and other similar systems. Examples are known from US2015085689, EP3217755 and US2015282215.

### SUMMARY

A specific object is to provide a method performed by a wireless device in a wireless communication system, for receiving a random access response message from a network node.

It is also an object to provide a wireless device.

It is a specific object to provide a wireless device, configured to operate in a wireless communication system, and configured for receiving a random access response message from a network node.

These and other objects are met by at least one of the embodiments disclosed herein. According to a first aspect, there is provided a method, performed by a wireless device in a wireless communication system, for receiving a random access response, RAR, message (RA Msg2) from a network node. Basically, the method comprises:
transmitting a selected random access preamble (RA Msg1) to the network node, the selected preamble being linked to specific downlink (DL) resources to be used for communicating the RAR message (RA Msg2) from the network node to the wireless device; and
receiving the RAR message (RA Msg2) from the network node on the specific DL resources, wherein the wireless device starts a Bandwidth Part, PWB, related timer when switching to a new active downlink BWP, the wireless device restarts the BWP related timer when scheduled on the active downlink BWP and the wireless device activates a default downlink BWP when the BWP related timer expires, and wherein the timer continues to run during the random-access procedure, and if the timer expires during the random-access procedure the random-access procedure continues until concluded, wherein if the BWP related timer has expired and the random access is successfully concluded, the wireless device returns to the BWP used before initiating the random access procedure with a reset of the BWP related timer, wherein if the BWP related timer has expired and the random access is unsuccessfully concluded, the wireless device switches to the default BWP.

According to a second non-claimed aspect, there is provided a method, performed by a network node in a wireless communication system, for transmitting a random access response, RAR, message (RA Msg2) to a wireless device. Basically, the method comprises:
receiving a random access preamble (RA Msg1) from the wireless device, the random access preamble being linked to specific DL resources to be used for communicating the RAR message (RA Msg2) from the network node to the wireless device; and
transmitting the RAR message (RA Msg2) to the wireless device on the specific DL resources.

According to a third aspect, there is provided a wireless device, configured to operate in a wireless communication system, and configured for receiving a random access response, RAR, message (RA Msg2) from a network node. The wireless device comprises:
- a communication interface configured for communication with the network node; and
- processing circuitry configured to cause the wireless device:
   to transmit a selected random access preamble (RA Msg1) to the network node, the selected preamble being linked to specific downlink (DL) resources to be used for communicating the RAR message (RA Msg2) from the network node to the wireless device; and
   to receive the RAR message (RA Msg2) from the network node on the specific DL resources, wherein the wireless device is configured to start a Bandwidth Part, PWB, related timer when switching to a new active downlink BWP, the wireless device is configured to restart the BWP related timer when scheduled on the active downlink BWP, and the wireless device is configured to activate a default downlink BWP when the BWP related timer expires, and wherein the timer continues to run during the random-access procedure, and if the timer expires during the random-access procedure the random-access procedure continues until concluded, wherein if the BWP related timer has expired and the random access is successfully concluded, the wireless device is configured to return to the BWP used before initiating the random access procedure with a reset of the BWP related timer, wherein if the BWP related timer has expired and the random access is unsuccessfully concluded, the wireless device is configured to switch to the default BWP.

According to a fourth non-claimed aspect, there is provided a network node, configured to operate in a wireless communication system, and configured for transmitting a random access response, RAR, message (RA Msg2) to a wireless device. The network node comprises:
- a communication interface configured for communication with the wireless device; and
- processing circuitry configured to cause the network node:
   to receive a random-access preamble (RA Msg1) from the wireless device, the random access preamble being linked to specific DL resources to be used for communicating the RAR message (RA Msg2) from the network node to the wireless device; and
   to transmit the RAR message (RA Msg2) to the wireless device on the specific DL resources.

According to a fifth non-claimed aspect, there is provided a network node configured to:
receive a random access preamble (RA Msg1) from the wireless device, the random access preamble being linked to specific DL resources to be used for communicating a random access response, RAR, message (RA Msg2) from the network node to the wireless device;
obtain, based on the received random access preamble, the specific DL resources to use for transmitting the RAR message (RA Msg2) to the wireless device; and
transmit the RAR message (RA Msg2) to the wireless device on the specific DL resources.

According to a sixth non-claimed aspect, there is provided a computer program comprising computer program code which, when executed in a wireless device, causes the wireless device to execute methods described herein.

According to an seventh non-claimed aspect, there is provided a computer program comprising computer program code which, when executed in a network node, causes the network node to execute methods described herein.

According an eight non-claimed aspect, there is provided a non-transitory carrier comprising such computer program(s), wherein the non-transitory carrier is one of an electronic signal, optical signal, radio signal, or computer readable storage medium.

According to a ninth non-claimed aspect, there is provided a method for resource selection for random access messages in a wireless communication system. The method comprises:
determining, based on a random access preamble (RA Msg1) used by a wireless device, specific DL resources to use for transmitting a random access response, RAR, message (RA Msg2) from a network node to the wireless device,
wherein the random access preamble belongs to one of a number of different sets or groups of preambles, and the specific DL resources to use for transmitting the RAR message (RA Msg2) are selected depending on which preamble set the random access preamble belongs to.

According to a tenth non-claimed aspect, there is provided a system configured to perform resource selection for random access messages in a wireless communication system,
wherein the system is configured to determine, based on a random access preamble (RA Msg1) used by a wireless device, specific DL resources to use for transmitting a random access response, RAR, message (RA Msg2) from a network node to the wireless device,
wherein the random access preamble belongs to one of a number of different sets or groups of preambles, and the specific DL resources to use for transmitting the RAR message (RA Msg2) are selected depending on which preamble set the random access preamble belongs to.

According to an eleventh non-claimed aspect, there is provided a communication system including a host computer comprising: a communication interface configured to receive user data originating from a transmission from a user equipment, UE, to a base station, wherein the UE comprises a radio interface and processing circuitry, the UE's processing circuitry configured to transmit a selected random access preamble (RA Msg1) to the network node, the selected preamble being linked to specific downlink, DL, resources; and to receive a random access response, RAR, message (RA Msg2) from the network node on the specific DL resources.

According to a twelfth non-claimed aspect, there is provided a communication system including a host computer comprising: processing circuitry configured to provide user data; and a communication interface configured to forward the user data to a cellular network for transmission to a user equipment, UE, wherein the cellular network comprises a base station having a radio interface and processing circuitry, the base station's processing circuitry configured to receive a random-access preamble (RA Msg1) from the wireless device, the random access preamble being linked to specific downlink, DL, resources; and to transmit a random access response, RAR, message (RA Msg2) to the wireless device on the specific DL resources.

### BRIEF DESCRIPTION OF THE DRAWINGS

Figure 1 is a schematic diagram illustrating the LTE downlink physical resource seen as a time/frequency grid.
Figure 2 is a schematic signaling diagram showing an example of the contention-based random access procedure in LTE.
Figure 3 is a schematic diagram showing an illustration of preamble subsets in LTE.
Figure 4 is a schematic diagram showing a principal illustration of random-access preamble transmission in LTE.
Figure 5 a schematic diagram of a table showing different PRACH sequences and their different properties.
Figure 6 a schematic diagram of a table showing different possible preamble formats in NR.
Figure 7 a schematic flowchart illustrating an exemplary process for a method for use in a wireless device in a wireless communication system for receiving a random access response message from a network node.
Figure 8 is a schematic flowchart illustrating an exemplary process for a method for use in a network node in a wireless communication system for transmitting a random access response message to a wireless device.
Figure 9 is a schematic block diagram illustrating an example of a wireless device configured for receiving a random access response message from a network node.
Figure 10 is a schematic block diagram illustrating an example of a network node configured for transmitting a random access response message to a wireless device.
Figure 11 is a schematic diagram illustrating an example of a telecommunication network connected via an intermediate network to a host computer.
Figure 12 is a schematic block diagram illustrating an example of a host computer communicating via a base station with a user equipment over a partially wireless connection.
Figures 13 to 16 are schematic flowcharts illustrating examples of methods implemented in a communication system including a host computer, a base station and a user equipment.
Figure 17 is a schematic flowchart illustrating an example of a method for resource selection for random access messages in a wireless communication system.
Figure 18 is a schematic block diagram illustrating an example of computer-implementation.

### DETAILED DESCRIPTION

Aspects of the present disclosure will be described more fully hereinafter with reference to the accompanying drawings. The apparatus and method disclosed herein can, however, be realized in many different forms and should not be construed as being limited to the aspects set forth herein. Like numbers in the drawings refer to like elements throughout.

The terminology used herein is for the purpose of describing particular aspects of the disclosure only, and is not intended to limit the disclosure. As used herein, the singular forms "a", "an" and "the" are intended to include the plural forms as well, unless the context clearly indicates otherwise.

In some embodiments a non-limiting term "UE" is used. The UE herein can be any type of wireless device capable of communicating with network node or another UE over radio signals. The UE may also be radio communication device, target device, device to device (D2D) UE, machine type UE or UE capable of machine to machine communication (M2M), a sensor equipped with UE, iPad, Tablet, mobile terminals, smart phone, laptop embedded equipped (LEE), laptop mounted equipment (LME), USB dongles, Customer Premises Equipment (CPE) etc.

Also in some embodiments generic terminology "network node", is used. It can be any kind of network node which may comprise of a radio network node such as base station, radio base station, base transceiver station, base station controller, network controller, gNodeB (gNB), NR BS, evolved Node B (eNB), Node B, Multi-cell/multicast Coordination Entity (MCE), relay node, access point, radio access point, Remote Radio Unit (RRU) Remote Radio Head (RRH), a multi-standard BS (a.k.a. MSR BS), TP (transmission point), TRP (transmission reception point), a core network node (e.g., MME, SON node, a coordinating node, positioning node, MDT node, etc.), or even an external node (e.g., 3rd party node, a node external to the current network), etc. The network node may also comprise a test equipment.

The term "specific resources" refers to the resources that are linked to the specific preamble or preamble subset, i.e. the resources that the network node will use upon reception of a specific preamble. The UE/wireless device thus indirectly selects the resources for the RAR by selecting a specific preamble from a specific subset, and "indicates" this selection to the network node via the selected preamble. The network node will know which resources to use, for example by obtaining information about the link between the preamble and the resources for the RAR by looking into a table, or by using predetermined links between preambles/preamble subsets, or by obtaining information about the link from information incorporated into the received preamble. The term "selected preamble" refers to the preambles that is being used for the random access, it does not necessarily imply that the UE has made the selection.

As mentioned, there is a need to establish a functioning random access procedure for NR and other similar systems; existing and future systems.

According to a first aspect, there is provided a method, performed by a wireless device in a wireless communication system, for receiving a random access response, RAR, message (RA Msg2) from a network node.

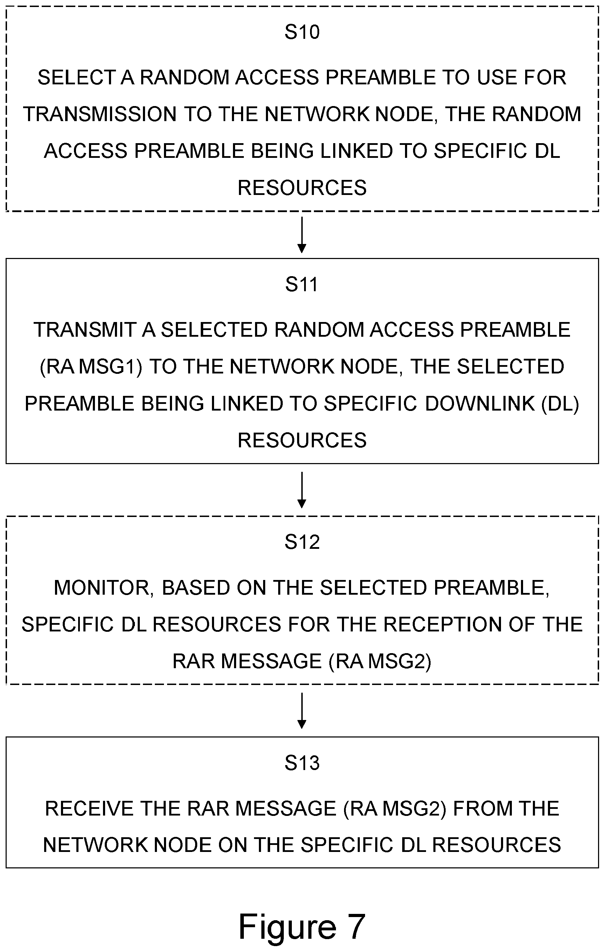

Basically, with reference to Figure 7, the method comprises:
S11: transmitting a selected random access preamble (RA Msg1) to the network node, the selected preamble being linked to specific downlink (DL) resources to be used for communicating the RAR message (RA Msg2) from the network node to the wireless device.
S13: receiving the RAR message (RA Msg2) from the network node on the specific DL resources.

Optional steps are indicated by dashed lines.

In a particular example, the method further comprises selecting S10 a random access preamble to use for transmission to the network node, the random access preamble being linked to specific DL resources to be used for communicating the RAR message (RA Msg2) from the network node to the wireless device.

In an optional embodiment, the wireless device may be informed about which selected preamble to use.

By way of example, the random access preamble may be selected from available preambles for random access.

In a specific example, the method further comprises monitoring S12, based on the selected preamble, the corresponding specific DL resources for the reception of the RAR message (RA Msg2).

As an example, the selected random access preamble may be part of a preamble subset of available random access preambles, and the specific DL resources may be linked to the preamble subset that the selected random access preamble is part of.

For example, the available random access preambles may be divided into two or more subsets.

A and B, and wherein the subset A is used for contention-based random access and the subset B is used for contention-free random access.

For example, the specific DL resources may be resources A if the selected random access preamble is part of subset A, and resources B if the selected random access preamble is part of subset B.

Optionally, the specific DL resources include a common resource for contention-based random access, and the specific DL resources include the current active bandwidth part, BWP, of the wireless device for contention-free random access.

As an example, the specific DL resources may be one or more of:
- a Control Resource Set, CORESET,
- a Bandwidth Part, BWP, or
- a search space to monitor.

In a particular embodiment, the method is performed for connected-state random access for a wireless device in connected state.

There is a Bandwidth Part, BWP, related timer with the following properties:
- the wireless device starts the timer when switching to a new active downlink BWP,
- the wireless device restarts the timer when scheduled on the active downlink BWP, and
- the wireless device activates a default downlink BWP when the timer expires.

The timer continues to run during the random-access procedure, and if the timer expires during the random-access procedure, the random-access procedure continues until concluded. If the timer has expired and the random access is successfully concluded, the wireless device returns to the BWP used before initiating the random-access procedure with a reset timer. If the timer has expired and the random access is unsuccessfully concluded, the wireless device switches to the default BWP.

According to another non-claimed aspect, there is provided a method, performed by a network node in a wireless communication system, for transmitting a random access response, RAR, message (RA Msg2) to a wireless device.

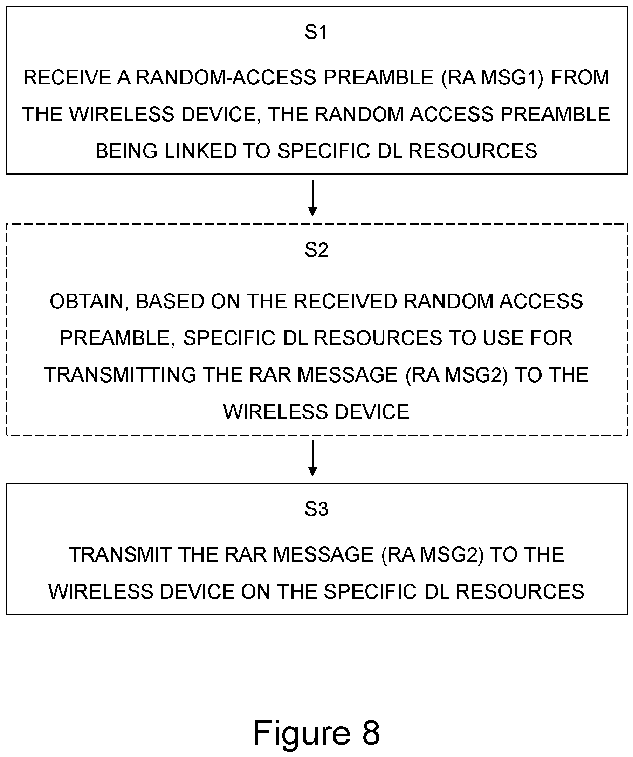

Basically, with reference to Figure 8, the method comprises:
S1: receiving a random access preamble (RA Msg1) from the wireless device, the random access preamble being linked to specific DL resources to be used for communicating the RAR message (RA Msg2) from the network node to the wireless device; and
S3: transmitting the RAR message (RA Msg2) to the wireless device on the specific DL resources.

Optional steps are indicated by dashed lines.

In a particular example, the method further comprises obtaining S2, based on the received random access preamble, specific DL resources to use for transmitting the RAR message (RA Msg2) to the wireless device.

By way of example, the network node may select, based on the received random access preamble, the specific DL resources to use for transmitting the RAR message and respond to the wireless device with the RAR message on the specific DL resources.

For example, the network node may select, depending on which preamble subset the random access preamble belongs to, the specific DL resources to use for transmitting the RAR message to the wireless device.

In a particular example, the received random access preamble is part of a random access preamble subset of available random access preambles, and the preamble subset is linked to the specific DL resources.

As an example, the available random access preambles may be divided into two subsets, one for contention-based random access and one for contention-free random access, and the specific DL resources may be based on which of the subsets the received random access preamble is part of.

Optionally, the specific DL resources may include a common resource for contention-based random access, and the specific DL resources may include the current active bandwidth part, BWP, of the wireless device for contention-free random access.

In a specific example embodiment, for contention-free random access, the specific DL resources include any Control Resource Set, CORESET, the wireless device is configured with.

By way of example, the indicated resources may be one or more of:
- a Control Resource Set, CORESET,
- a Bandwidth Part, BWP, or
- a search space for the wireless device to monitor.

For example, the method may be performed for connected-state random access for a wireless device in connected state.

In a specific set of example embodiments, the wireless device may be a user equipment and the network node may be a base station.

For example, the wireless device and the network node may operate using a radio access technology (RAT) that allows for division of the carrier bandwidth into BWPs, such as RAT new radio (NR).

In the following the invention will be described with reference to non-limiting example embodiments, with particular reference to NR and similar systems.

For example, when establishing a functioning RA procedure for NR, it is important to make sure that the messages sent will be received on the other end. Thus, establishing on which resources to transmit the messages so that they will be received is of particular importance. One such issue is where, in which resources, to transmit the RAR from the network node to the wireless device upon reception of the preamble in the network node, so that the wireless device will receive the RAR. In LTE, all UEs are monitoring the same single BWP so the network knows where it can send the RA response. For NR this is not the case so the network must send the response to contention-based access in a common resource. In NR system supports to operate within very wideband CC, but all of UE could not provide the capability for wideband operation. Hence, it is hard to operate initial access within system bandwidth. Instead, NR can define BWP for initial access operation. Within the BWP, NR system can operate initial access procedure for SS/PBCH block transmission, system information delivery, paging and RACH procedure. It has been agreed that at least one of configured DL BWPs includes one CORESETwith common search space at least in primary component carrier. Thus, in NR for example, there may be a carrier of a certain bandwidth BWc but a UE may be configured to only receive a fraction of this bandwidth, also referred to as the "active bandwidth part" or "active BWP" of that UE. Different UEs can have different active BWPs. Although in general the network knows the active BWP of a UE, for a UE that makes a contention-based access, the network does not know from what UE the random-access response comes. Still, the network RA responses must be such that it must fall within the active BWP of the UE. This means that in case of contention-based RA, the gNB messages must be transmitted in some pre-determined frequency range and the UE must move there, i.e. leave its current active BWP, to receive it. On the other hand, in case of contention-free access, the network knows what UE is making the access and can transmit the RA response in the current active BWP of the UE.

By way of example, in some illustrative embodiments, the current invention provides solutions to the above-mentioned problems and drawbacks by proposing to divide the random access preambles into different sets or groups. Depending on which one the UE choses, the gNB responds with the random access response (RAR) in a specific resource. The UE may then monitor the RAR in said specific resource. The specific resources could be which BW-part or CORESET or associated search space the response will be transmitted in. One possible grouping of random access preambles is a set A for preambles used for contention based RA, and a set B for contention free (non-contention based) RA. The UE then monitors resources A if a preamble from set A is selected, and resources B if a preamble from set B is selected. In NR the network must send response to contention-based access in a common resource. However, for contention-free access it can send it in the active BWP of the UE because the network knows who is accessing, thus different resources may be used. The resources information could for example include search space information, where to look for a related DL transmission, but also specific time/frequency resources, such as specific PRBs or even RE. The indication will tell the UE the CORESET and search space for the PDCCH scheduling message 4. This can be either explicit or implicit in the sense that the UE gets a BWP indication, and that specific BWP is itself associated with a specific common search space.

### Random Access in LTE

### Step 1, Preamble selection and transmission

As mentioned above, the first step in the random-access procedure is the transmission of a random-access preamble. The main purpose of the preamble transmission is to indicate to the base station (eNB) the presence of a random-access attempt and to allow the base station to estimate the delay between the eNB and the UE. The delay estimate will be used in the second step to adjust the uplink timing.

The time-frequency resource on which the random-access preamble is transmitted is known as the Physical Random-Access Channel (PRACH). The network broadcasts information to all UEs in which time-frequency resource random-access preamble transmission is allowed (that is, the PRACH resources, in system information block 2, SIB-2). As part of the first step of the random-access procedure, the UE selects one preamble to transmit on the PRACH.

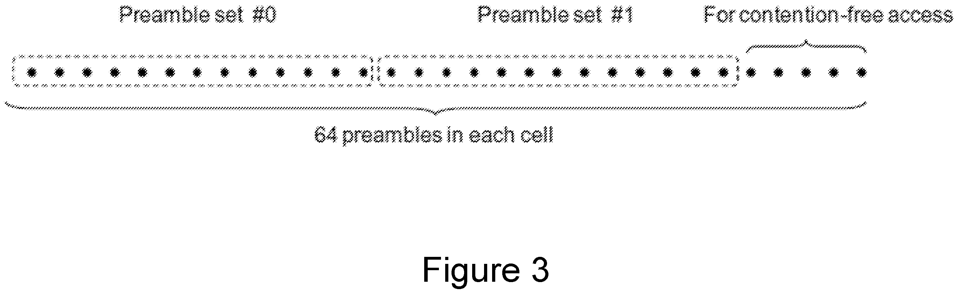

In each cell, there are 64 preamble sequences available. Two subsets of the 64 sequences are defined as illustrated in Figure 3, where the set of sequences in each subset is signaled as part of the system information. When performing a (contention-based) random-access attempt, the UE selects at random one sequence in one of the subsets. As long as no other UE is performing a random-access attempt using the same sequence at the same time instant, no collisions will occur and the attempt will, with a high likelihood, be detected by the eNB. The subset to select the preamble sequence from is given by the amount of data the UE would like to (and from a power perspective can) transmit on the UL-SCH in the third random-access step. Hence, from the preamble the UE used, the eNB, will get some guidance on the amount of uplink resources to be granted to the UE. If the UE has been requested to perform a contention-free random access, for example for handover to a new cell, the preamble to use is explicitly indicated from the eNB. To avoid collisions, the eNB should preferably select the contention-free preamble from sequences outside the two subsets used for contention-based random access.

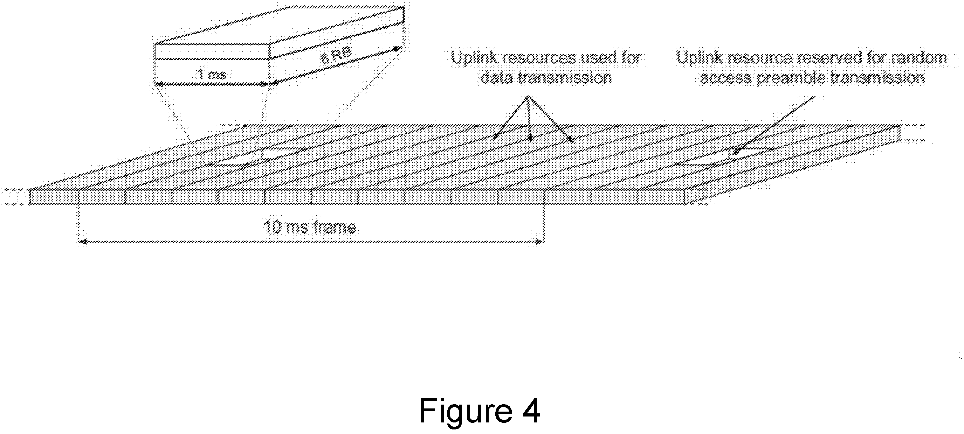

In the frequency domain, the PRACH resource, illustrated in Figure 4, has a bandwidth corresponding to six resource blocks (1.08 MHz). This nicely matches the smallest uplink cell bandwidth of six resource blocks in which LTE can operate. Hence, the same random-access preamble structure can be used, regardless of the transmission bandwidth in the cell. In the time domain, the length of the preamble region depends on configured preamble. The basic random-access resource is 1 ms in duration, but it is also possible to configure longer preambles. Also, note that the eNB uplink scheduler in principle can reserve an arbitrary long-random-access region by simply avoiding scheduling UEs in multiple subsequent subframes. Typically, the eNB avoids scheduling any uplink transmissions in the time-frequency resources used for random access, resulting in the random-access preamble being orthogonal to user data. This avoids interference between UL-SCH transmissions and random-access attempts from different UEs. A principal illustration of random-access preamble transmission in LTE could also be seen in Figure 4.

For FDD, there is at most one random-access region per subframe - that is, multiple random-access attempts are not multiplexed in the frequency domain. From a delay perspective, it is better to spread out the random-access opportunities in the time domain to minimize the average waiting time before a random-access attempt can be initialized. For TDD, multiple random-access regions can be configured in a single subframe. The reason is the smaller number of uplink subframes per radio frame in TDD. To maintain the same random-access capacity as in FDD, frequency-domain multiplexing is sometimes necessary. The number of random-access regions is configurable and can vary from one per 20 ms to one per 1 ms for FDD; for TDD up to six attempts per 10 ms radio frame can be configured.

The preamble consists of two parts; preamble sequence and Cyclic prefix (CP). Furthermore, the preamble transmission uses a guard period to handle the timing uncertainty. Prior to starting the random-access procedure, the UE has obtained downlink synchronization from the cell-search procedure. However, as uplink synchronization has not yet been established prior to random access, there is an uncertainty in the uplink timing as the location of the UE in the cell is not known. The uplink timing uncertainty is proportional to the cell size and amounts to 6.7 µs/km. To account for the timing uncertainty and to avoid interference with subsequent subframes not used for random access, a guard time is used as part of the preamble transmission - that is, the length of the actual preamble is shorter than 1 ms. Including a cyclic prefix as part of the preamble is beneficial as it allows for frequency-domain processing at the base station, which can be advantageous from a complexity perspective. Preferably, the length of the cyclic prefix is approximately equal to the length of the guard period. With a preamble sequence length of approximately 0.8 ms, there is 0.1 ms cyclic prefix and 0.1 ms guard time. This allows for cell sizes up to 15 km and is the typical random-access configuration, such as configuration 0. To handle larger cells, where the timing uncertainty is larger, preamble configurations 1-3 can be used. Some of these configurations also support a longer preamble sequence to increase the preamble energy at the detector, which can be beneficial in larger cells. The preamble configuration used in a cell is signaled as part of the system information.

### Step 2, Random Access Response

In response to the detected random-access attempt, the eNB will, as the second step of the random-access procedure, transmit a message on the DL-SCH, containing:
- The index of the random-access preamble sequences the network detected and for which the response is valid
- The timing correction calculated by the random-access preamble receiver
- A scheduling grant, indicating resources the UE will use for the transmission of the message in the third step
- A temporary identity, the TC-RNTI, used for further communication between the UE and the network.

If the network detects multiple random-access attempts (from different UEs), the individual response messages of multiple UEs can be combined in a single transmission. Therefore, the response message is scheduled on the DL-SCH and indicated on a PDCCH using an identity reserved for random-access response, the RA-RNTI. All UEs that have transmitted a preamble monitor the L1/L2 control channels for random-access response within a configurable time window. The timing of the response message is not fixed in the specification in order to be able to respond to sufficiently many simultaneous accesses. It also provides some flexibility in the base-station implementation. If the UE does not detect a random-access response within the time window, the attempt will be declared as failed and the procedure will repeat from the first step again, possibly with an increased preamble transmission power.

As long as the UEs that performed random access in the same resource used different preambles, no collision will occur and from the downlink signaling it is clear to which UE(s) the information is related. However, there is a certain probability of contention - that is, multiple UEs using the same random-access preamble at the same time. In this case, multiple UEs will react upon the same downlink response message and a collision occurs. Resolving these collisions is part of the subsequent steps, as mentioned above. Contention is also one of the reasons why hybrid ARQ is not used for transmission of the random-access response. A UE receiving a random-access response intended for another UE will have incorrect uplink timing. If hybrid ARQ were used, the timing of the hybrid-ARQ acknowledgement for such a UE would be incorrect and may disturb uplink control signaling from other users.

Upon reception of the random-access response in the second step, the UE will adjust its uplink transmission timing and continue to the third step. If contention-free random access using a dedicated preamble is used, then this is the last step of the random-access procedure as there is no need to handle contention in this case. Furthermore, the UE already has a unique identity allocated in the form of a C-RNTI.

### Step 3, UE identification

After the second step, the uplink of the UE is time synchronized. However, before user data can be transmitted to/from the UE, a unique identity within the cell, the C-RNTI, must be assigned to the UE. Depending on the UE state, there may also be a need for additional message exchange for setting up the connection.

In the third step, the UE transmits the necessary messages to the eNB using the UL-SCH resources assigned in the random-access response in the second step. Transmitting the uplink message in the same manner as scheduled uplink data instead of attaching it to the preamble in the first step is beneficial for several reasons. First, the amount of information transmitted in the absence of uplink synchronization should be minimized, as the need for a large guard time makes such transmissions relatively costly. Secondly, the use of the "normal" uplink transmission scheme for message transmission allows the grant size and modulation scheme to be adjusted to, for example, different radio conditions. Finally, it allows for hybrid ARQwith soft combining for the uplink message. The latter is an important aspect, especially in coverage-limited scenarios, as it allows for the use of one or several retransmissions to collect sufficient energy for the uplink signaling to ensure a sufficiently high probability of successful transmission. Note that RLC retransmissions are not used for the uplink RRC signaling in step 3.

An important part of the uplink message is the inclusion of a UE identity, as this identity is used as part of the contention-resolution mechanism in the fourth step. If the UE is in the RRC_CONNECTED state - that is, connected to a known cell and therefore has a C-RNTI assigned - this C-RNTI is used as the UE identity in the uplink message. Otherwise, a core-network UE identifier is used and the eNB needs to involve the core network prior to responding to the uplink message in step 3. UE-specific scrambling is used for transmission on UL-SCH. However, as the UE may not yet have been allocated its final identity, the scrambling cannot be based on the C-RNTI. Instead, a temporary identity is used (TC-RNTI).

### Step 4, Contention Resolution

The last step in the random-access procedure consists of a downlink message for contention resolution. Note that, from the second step, multiple UEs performing simultaneous random-access attempts using the same preamble sequence in the first step listen to the same response message in the second step and therefore have the same temporary identifier. Hence, in the fourth step, each UE receiving the downlink message will compare the identity in the message with the identity transmitted in the third step. Only a UE which observes a match between the identity received in the fourth step and the identity transmitted as part of the third step will declare the random-access procedure successful. If the UE has not yet been assigned a C-RNTI, the TC-RNTI from the second step is promoted to the C-RNTI; otherwise the UE keeps its already assigned C-RNTI.

The contention-resolution message is transmitted on the DL-SCH, using the temporary identity from the second step for addressing the UE on the L1/L2 control channel. Since uplink synchronization has already been established, hybrid ARQ is applied to the downlink signaling in this step. UEs with a match between the identity they transmitted in the third step and the message received in the fourth step will also transmit a hybrid-ARQ acknowledgement in the uplink. UEs that do not find a match between the identity received in the fourth step and the respective identity transmitted as part of the third step are considered to have failed the random-access procedure and need to restart the procedure from the first step. Obviously, no hybrid-ARQ feedback is transmitted from these UEs. Furthermore, a UE that has not received the downlink message in step 4 within a certain time from the transmission of the uplink message in step 3 will declare the random-access procedure as failed and need to restart from the first step.

### Random Access in NR

There has been a number of agreements in the telecommunications standardization organ 3GPP relating to random access in NR. The following has been agreed:
A RACH procedure including RACH preamble (Msg1), random access response (Msg2), message 3, and message 4 is at least assumed for NR from RAN1 perspective. A simplified RACH procedure, e.g., Msg1 (UL) and Msg2 (DL), should be further studied. NR supports both slot based PDCCH, PDSCH and PUSCH, and non-slot based PDSCH/PUSCH transmissions for Msg2/Msg3/Msg4 transmission. From the physical layer perspective, the RA procedure comprises the transmission of the RA preamble in a PRACH, the RAR in a PDSCH, Msg3 on PUSCH and Msg4 on PDSCH. For the non-slot based transmission, 2, 4 and 7 OFDM-symbol durations for the PDSCH/PUSCH is supported. For 4-step RACH procedure, a RACH transmission occasion is defined as the time-frequency resource on which a PRACH message 1 is transmitted using the configured PRACH preamble format with a single particular tx beam. NR supports random access procedure also for CONNECTED mode UEs. RAN1 may study transmitting PRACH preambles in CONNECTED mode in resources based on CSI-RS.

The NR physical broadcast channel NR-PBCH is a non-scheduled broadcast channel carrying at least a part of minimum system information with fixed payload size and periodicity predefined in the specification depending on carrier frequency range. Initially, the following two options were discussed. Alt. 1: NR-PBCH carries a part of minimum system information, where remaining minimum system information is transmitted via other channel at least partially indicated by NR-PBCH or remaining minimum system information is transmitted via another channel not indicated in NR-PBCH. For example NR-PBCH carries a part of minimum system information including information necessary for the UE to receive channel carrying remaining minimum system information, or NR-PBCH carries information necessary for the UE to perform initial UL transmission (not limited to NR-PRACH, e.g. PRACH Msg1) and possibly information necessary to receive the response to initial UL transmission (e.g., PRACH Msg2) in addition to information in the first example, or NR-PBCH carries information necessary for the UE to perform initial UL transmission (not limited to NR-PRACH, e.g. PRACH Msg1) and information necessary. Information necessary to receive remaining minimum system information is provided after initial UL transmission to receive the response to initial UL transmission (e.g. PRACH Msg. 2). Alt. 2: NR-PBCH carries all of minimum system information. Random access configuration is included in remaining minimum SI. All random-access configuration information is broadcasted in all beams used for remaining minimum system information (RMSI) within a cell i.e., RMSI information, is common for all beams. It has subsequently been defined in NR that the PBCH carries a small amount of information required to be able to receive the scheduled PDSCH. On the PDSCH, the remaining minimum system information (RMSI aka Sib1) is transmitted, as are the other SIBs (SIB2 and upwards). SIB1 includes information on when to expect the other SIBs. SIB1 is sufficient to perform RA.

One PRACH format is configured for a cell, under further study is the impact band width part/ supplementary uplink (BWP)/SUL. For PRACH formats based on short sequence length, format A and format B is considered as a package for the PRACH configuration, configures either format A/B or format C. If format A/B is configured, the last PRACH resource within a RACH slot uses the format B and other PRACH resources within the RACH slot uses format A. At least support only format B4 within a RACH slot, in the case of a single PRACH occasion within a RACH slot.

NR supports indication of PRACH resource allocation for non-contention based random access for a UE, wherein PRACH resource refers to time/frequency/code resources of the PRACH preamble. For contention-free random access, the following options are under evaluation: Option 1: Transmission of only a single Msg1 before the end of a monitored RAR window, Option 2: A UE can be configured to transmit multiple simultaneous Msg1. Note: multiple simultaneous Msg1 transmissions use different frequency resources and/or use the same frequency resource with different preamble indices. Option 3: A UE can be configured to transmit multiple Msg1 over multiple RACH transmission occasions in the time domain before the end of a monitored RAR window. For contention-free RA procedure for handover, the SCS for Msg1 and the SCS for Msg2 are provided in the handover command.

For contention-based random access, an association between an SS block in the SS burst set and a subset of RACH resources and/or preamble indices is configured by a set of parameters in RMSI. For contention-based random procedure, after the UE selects one PRACH transmission occasion for Msg1 transmission, the UE is not allowed to select another one before the expiration of RAR window for the same Msg1 transmission in Rel-15. For contention-based NR 4-step RA procedure: SCS for Msg1 is configured in the RACH configuration, SCS for Msg2 is the same as the numerology of RMSI, SCS for Msg3 is configured in the RACH configuration separately from SCS for Msg1, SCS for Msg4 is the same as in Msg2.

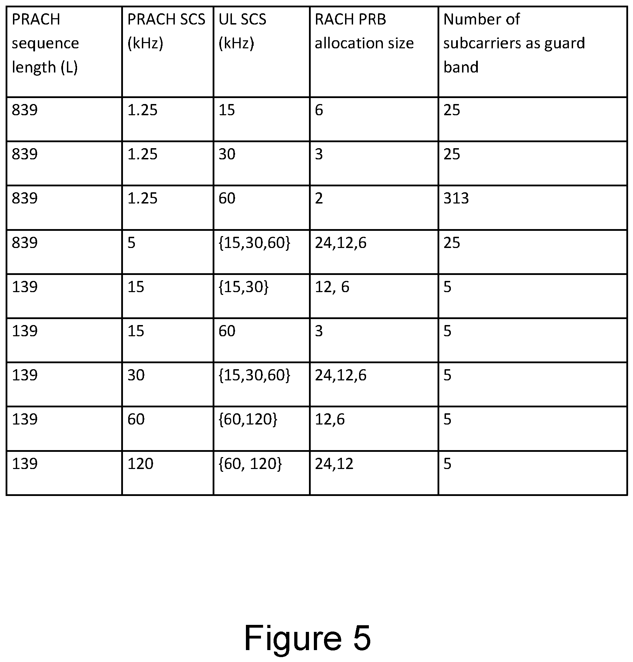

A RACH resource is defined as a time-frequency resource to send RACH preamble. In order for the transmission of the information required for the initial access (e.g. configuration of random access resource), at least following options are to be studied: Opt 1: the transmission is scheduled by dynamic signaling (e.g. control channel), Opt 2: the transmission is scheduled by semi-static signaling (e.g. via the previous part), Opt 3: the transmission is done alone without associated signaling (e.g. predefined in spec). Currently, a solution based roughly on option 2 is selected in NR. NR will support different PRACH configurations, e.g., considering different numerologies case and whether Tx/Rx reciprocity is available or not at gNB. The region for PRACH transmission should be aligned to the boundary of uplink symbol/slot/subframe. RACH PRB allocation is the PRBs allocated to RACH within a RACH slot. In Figure 5 is shown a table comprising NR supports the different numbers of subcarriers as guard band.

When Tx/Rx reciprocity is available at gNB at least for multiple beams operation, the following RACH procedure is considered for at least UE in idle mode:
- Association between one or multiple occasions for DL broadcast channel/signal and a subset of RACH resources is informed to UE by broadcast system information or known to UE.
- Based on the DL measurement and the corresponding association, UE selects the subset of RACH resources. Tx beam selection for RACH preamble transmission shall be further studied.
- At gNB, the DLTx beam for the UE can be obtained based on the detected RACH preamble and would be also applied to Message 2. UL grant in message 2 may indicate the transmission timing of message 3.

For the cases with and without Tx/Rx reciprocity, the common random-access procedure should be strived. When Tx/Rx reciprocity is not available, then the following could be further considered for at least UE in idle mode: Whether or how to report DL Tx beam to gNB, e.g., RACH preamble/resource or Msg. 3, and whether or how to indicate UL Tx beam to the UE, e.g., RAR.

### Step 1, preamble selection and transmission, Msg1 PRACH

The first step of the regular NR random access procedure is the transmission of the preamble from the UE to the gNB. NR supports multiple RACH preamble formats, including at least: RACH preamble format with longer preamble length and RACH preamble format with shorter preamble length. How many signatures (e.g. number of RACH sequences, payload size, etc.) shall be further studied. For initial access, either long sequence based preamble or short sequence based preamble is configured in a RACH configuration. A configuration by higher layers for a PRACH transmission includes: A PRACH configuration parameter, a serving cell index, a preamble index, a PRACH format, a corresponding RA-RNTI and a PRACH resource. A PRACH format is selected from the preamble sequence set for the corresponding preamble sequence length using the preamble index.

NR defines that: a random access preamble format consists of one or multiple random access preamble(s), a random access preamble consists of one preamble sequence plus CP, and one preamble sequence consists of one or multiple RACH OFDM symbol(s). UE transmits PRACH according to the configured random access preamble format. The region for PRACH transmission should be aligned to the boundary of uplink symbol/slot/subframe. In NR, the RACH configuration provides at least: RACH time/freq. information and RACH preamble format. NR supports multiple RACH preamble formats, including at least: RACH preamble format with longer preamble length and RACH preamble format with shorter preamble length.

Numerology for RACH preamble can be different or the same from that for the other UL data/control channels. Whether UE needs to transmit one or multiple/repeated preamble within a subset of RACH resources can be informed by broadcast system information. For example, to cover gNB RX beam sweeping in case of NO Tx/Rx reciprocity at the gNB. The slot duration for PRACH resource mapping for short preamble formats (i.e., L=139) is based on the RACH Msg1 numerology, i.e. SCS. The slot duration for PRACH resource mapping for long preamble formats (i.e., L=839) is based on 15kHz SCS. The maximum bandwidth for a RACH preamble transmission is not wider than 5 MHz for a carrier frequency of below 6 GHz and not wider than X MHz for a carrier frequency ranging from 6 GHz to 52.6 GHz. X will be down selected from 5, 10, and 20MHz. At least, one reference numerology for RACH preamble is defined; 1.25 x n kHz or 15 x n kHz. Based on the reference numerology for RACH preamble, multiple RACH preambles with scalable numerologies are supported depending on the carrier frequency. For NR PRACH preamble L=839 with SCS = 1.25 kHz, Ncs restricted set type B is supported in addition to restricted set type A. For NR PRACH preamble L=839 with SCS 5kHz, Ncs restricted set type A and type B are supported.

Random access preambles in a cell are grouped into random preambles and dedicated preambles, which are used for contention-based random access and non-contention-based random access, respectively. Further, the random preambles may be divided into two subgroups, group A and B. The UE selects random group B if the following conditions are met: Random group B exists, the size of Msg3 (the third message transmitted in the random access procedure shown above) is larger than the corresponding threshold configured for random group A, and the path loss of the UE is less than the threshold. If any of the preceding conditions are not met, the UE selects random group A. After a random group is determined, the UE selects a preamble from the group randomly.

Multiple/repeated RACH preambles in a RACH resource is supported. How to support single-beam and/or multi-beam operation and if preamble could be the same or different shall be further studied. The design of the random access procedure should take into account the possible use of single-beam and multiple beam operations, including Non Rx/Tx reciprocity at BS or UE and Full or partial Rx/Tx reciprocity at BS or UE. In case that multiple beam-forming is applied to DL broadcast channels/signals for initial access, RACH resource is obtained by UE from detected DL broadcast channels/signals. Multiple occasions for RACH preamble transmission in a given time interval are considered. Numerology for RACH preamble can be different depending on frequency ranges. How many numerologies will be supported per frequency range is not yet determined. The support of different RACH resource subset size that is associated with one or multiple occasions for DL broadcast channel/signal has been agreed, and the support of same RACH resource subset size that is associated with one or multiple occasions for DL broadcast channel/signal and non-uniform transmission of DL broadcast channel/signal across different directions in a multi-beam scenario. In the evaluation for RACH preamble transmission and RACH resource selection, companies report the following assumptions: Support of Rx beam sweeping at the base station and support of coverage, e.g., the values defined in TR38.913.

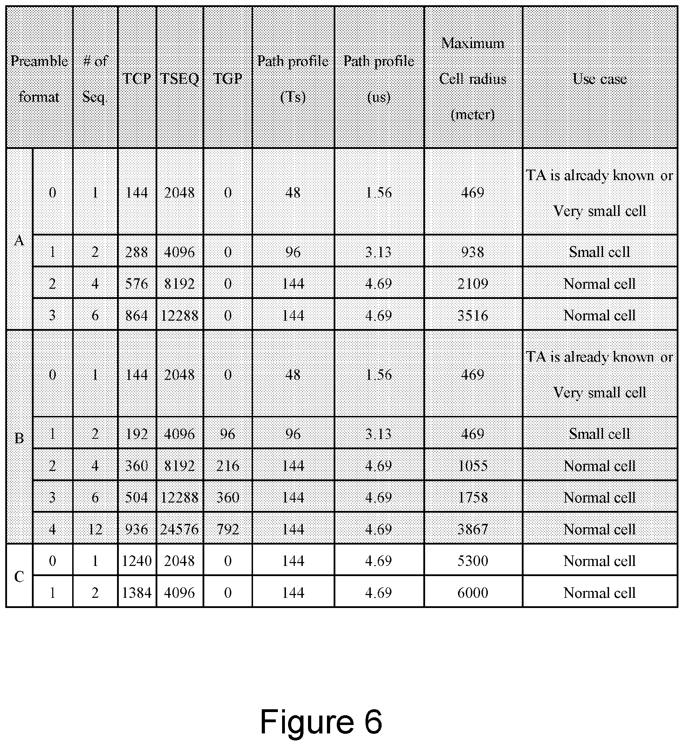

UE Tx beam(s) for preamble transmission(s) is selected by the UE. During a RACH transmission occasion of single or multiple/repeated preamble(s) as informed by broadcast system information, UE uses the same UE Tx beam. A preamble index consists of preamble sequence index and OCC index, if OCC is supported. A subset of preambles can be indicated by OCC indices. Assuming N preamble indices are available in one RACH transmission occasion: If only one SSB is mapped to only one RACH transmission occasion, each RACH transmission occasion has preamble index 0 to N-1. In Figure 6 is shown different possible NR preamble formats. For 15 kHz subcarrier spacing, preamble formats A2, A3, B4 have been agreed and preamble formats A0, A1, B0, B1, B2, B3, C0, C1 are a working assumption. Unit is Ts, where Ts = 1/30.72MHz. PRACH preamble are aligned with OFDM symbol boundary for data with same numerology. Additional 16Ts for every 0.5ms should be included in TCP when RACH preamble is transmitted across 0.5ms boundary or from 0.5ms boundar. For format A, GP can be defined within the last RACH preamble among consecutively transmitted RACH preambles. For 30/60/120 kHz subcarrier spacing, preamble format can be scaled according to subcarrier spacing. For example, Ts =1/(2*30720) ms for 30 kHz subcarrier spacing, Ts =1/(4*30720) ms for 60 kHz subcarrier spacing, Ts =1/(8*30720) ms for 120 kHz subcarrier spacing. Note that some of the formats may not be applicable to all subcarrier spacings.

NR supports the following procedure(s) for Msg1 re-transmission: Down selection or combination of power ramping, UE beam switching, and RACH resource switching. How to combine power ramping, UE beam switching, and RACH resource switching depending on number of transmit/receive point (TRP) Rx beams, UE Tx beams, number of RACH resources and whether to consider different procedures depending on the single-TRP/beam or multi-TRPs/beams will be further studied.

Association between one or multiple occasions for SS block and a subset of RACH resources and/or subset of preamble indices is informed to UE by broadcast system information or known to UE or eventually dedicated signaling. Is is further to be discussed/determined if gNB can configure an association between CSI-RS for L3 mobility and a subset of RACH resources and/or a subset of preamble indices, for determining Msg2 DL Tx beam. The use of a UE identity in Msg 1 is under discussion, including an RA response that is addressed to the UE identity in Msg 1.

### Step 2, RAR Msg2 PDSCH

Also in NR, the second RA step is transmitting a RAR from the gNB to the UE. At least for initial access, the PDSCH for RAR is confined within NR UE minimum DL BW for a given frequency band.

A UE attempts to detect a PDCCH with the indicated RA-RNTI during a window controlled by higher layers. The window starts at the symbol of the earliest control resource set the UE is configured forType1-PDCCH common search space, a certain number of symbols after the last symbol of the preamble sequence transmission. The UE detects the PDCCH with the indicated RA-RNTI and a corresponding DL-SCH transport block within the window, and corresponding DL-SCH transport block within the window, i.e. getting an indication of an UL-grant, a.k.a. a RAR grant.

Regardless of whether Tx/Rx reciprocity is available or not at gNB at least for multiple beams operation, at gNB, the DL Tx beam for message 2 can be obtained based on the detected RACH preamble/resource and the corresponding association. UL grant in message 2 may indicate the transmission timing of message 3. At least for the case without gNB Tx/Rx beam correspondence, gNB can configure an association between DL signal/channel, and a subset of RACH resources and/or a subset of preamble indices, for determining Msg2 DL Tx beam.

Based on the DL measurement and the corresponding association, UE selects the subset of RACH resources and/or the subset of RACH preamble indices. A preamble index consists of preamble sequence index and orthogonal cover code, OCC, index, if OCC is supported. A subset of preambles can be indicated by OCC indices.

For RAR, X can be supported for the timing gap between the end of Msg1 transmission and the starting position of the CORESET for RAR. Value of X = ceiling(Δ/(symbol duration))*symbol duration, where the symbol duration is based on the RAR numerology, where Δ is to accommodate sufficient time for UE Tx-Rx switching if needed (e.g., for TDD).

UE assumes single RAR reception at a UE within a given RAR window, however, NR random access design should not preclude UE reception of multiple RAR within a given RAR window, if need arises. RACH reception/RAR transmission in TRPs/beams other than the one transmitting synchronization signals needs further study. Also for further study; message 2 PDCCH/PDSCH is received by the UE assuming that the PDCCH/PDSCH DMRS conveying message 2 is QCL'ed with the SS block which the preamble/RACH occasion the UE sent is associated to.

At least for initial access, RAR is carried in NR-PDSCH scheduled by NR-PDCCH in CORESET configured in RACH configuration. CORESET configured in RACH configuration can be same or different from CORESET configured in NR-PBCH. For single Msg1 RACH, the RAR window starts from the first available CORESET after a fixed duration from the end of Msg1 transmission, wherein the fixed duration is X T_s and X is the same for all RACH occasions. For a single Msg1 RACH from UE, the size of a RAR window is the same for all RACH occasions and is configured in RMSI, and RAR window could accommodate processing time at gNB. Maximum window size depends on worst case gNB delay after Msg1 reception including processing delay, scheduling delay, etc. Minimum window size depends on duration of Msg2 or CORESET and scheduling delay.

### Step 3, Msg3 PUSCH

Also in NR a third message (Msg3) is sent from the UE to the gNB as a response to the RAR Msg2. Msg3 is scheduled by the uplink grant in RAR and transmitted after a minimum time gap from the end of Msg2 over-the-air reception. The gNB has the flexibility to schedule the transmission time of Msg3 while ensuring the minimum time gap. Msg3 is transmitted on UL-SCH containing a C-RNTI MAC CE or CCCH SDU, submitted from upper layer and associated with the UE Contention Resolution Identity.

In RACH procedure, the followings are considered at least for UE in idle mode: UL Tx beam for Msg3 transmission is determined by UE, UE may use the same UL Tx beam used for Msg1 transmission, i.e. Message 3 is transmitted by the UE assuming that the same Rx beam as was used for PRACH preamble reception by gNB to which the received RAR is associated to. If determination can be assisted by additional signaling from gNB if necessary and how to determine UL Tx beam for Msg 3 shall be further studied.

NR supports RACH configuration in RMSI containing 1 bit to convey SCS of Msg3. In sub-6 GHz, subcarrier spacing of Msg3 can be either 15 or 30 kHz. In over-6 GHz, subcarrier spacing of Msg3 can be either 60 or 120 kHz. The subcarrier spacing for Msg3 PUSCH transmission is provided by higher layer parameter. A UE shall transmit PRACH and Msg3 PUSCH on a same serving cell.

### Step 4, Msg4 PDSCH

The fourth message, Msg4, is sent from the gNB to the UE. At least for initial access, the PDSCH for Msg4 is confined within NR UE minimum DL BW for a given frequency band.

If there is no beam reporting in RACH message 3, Message 4 PDCCH/PDSCH is received by the UE assuming that the PDCCH/PDSCH DMRS conveying message 4 is quasi co-located (QCL'ed) with that of Msg2. Under further study is how to do if there is beam reporting in RACH message 3, and if and how beam reporting in RACH message 3 impacts message 4 Tx QCL assumption. The subcarrier spacing for Msg4 PDSCH transmission is same as for the PDSCH providing the random access response.

### Selecting preamble and indicating RAR resources to the UE

There are at least two different "types" of RA, including the initial RA, where the UE joins the network initially, and the UL-synch RA, where the UE has lost UL-synchronization. There may also be other reasons for random access. The first step of random access includes selecting and transmitting a RA preamble from the UE to the gNB. It is proposed to divide the random-access preambles into different sets. The preambles could for example be divided into two sets, A and B, one for contention-based RA and one for contention free. If the RA is contention free, the gNB may pick any CORESET to transmit the RAR and the UE responds with searching at different places for the RAR depending on if the RA is contention-based or contention free. The preambles may also be divided into two or more sets which are unrelated to contention.

By way of example, in some illustrative embodiments, the current invention could be regarded as a two-step method, wherein the first step is selecting a preamble based on some criterion, e.g. contention-based vs contention-free, and then selecting resource for RA response based on the preamble. Depending on the chosen preamble set, the gNB sends the RAR in a specific resource, thus based on the preamble, the UE monitors for RA response in for example resource A vs resource B. In one example, depending on which RA preamble that is chosen by the UE (from which RA preamble set), and where it is transmitted the UE monitors the response in a specified resource. In one example, depending on which RA preamble that is chosen and on which UL-BWP it is transmitted, the UE monitors the response in a specified resource. The DL-BWP could be a function of the preamble and the time and frequency resources used for said transmission, and possibly the UL-BWP used, for example: DL-BWP= f(UL-BWP, Preamble, resources (f/t)). Depending on the preamble, the network will select resources for the RAR from a first set of resources or a second set of resources. These set of resources may correspond to different CORESETS, different search spaces, and different BWPs.

Depending on which preamble/preamble set the UE choses, the gNB responds with the random-access response (RAR) in a specific resource. The UE then monitors the RAR in said specific resource. The specific resources could be which BW-part or CORESET the response will be transmitted in, which search space to monitor. It has been agreed that each BW-part contains a common search space for RA. A BW-part must have UE-specific CORESET, but could also have a common CORESET.

In the case of division of the preambles into ones used for contention-based and contention-free, this is based on the fact that for a UE that makes a contention-based access, the network does not know from what UE the random-access response comes, but in case of contention-free access, the network knows what UE is making the access and can transmit the RA response in the current active BWP of the UE. If contention free the gNB may pick any CORESET the UE is configured with. For the contention-free RA the UE uses a specific preamble and the gNB sends the RAR on a particular BW-part/CORESET. For example, the gNB may send the RAR on:
- CRB resource 1 if preamble is from set A
- CRB resource 2 if preamble is from set B
where carrier resource block (CRB) resources i (i ≥ 1,2) are configured by higher layers. A and B could be different set based on contention, but the resources could also be based on other preamble sets/groups.

### Example operations

The proposed methods will now be described in more detail, once again referring to Figures 7 and 8. It should be appreciated that in Figures 7 and 8, operations and modules which are illustrated with dashed border are optional. It should also be appreciated that the operations do not need to be performed in order. Furthermore, it should be appreciated that not all of the operations need to be performed.

Figure 7 illustrates a method, performed in a wireless device in a wireless communication system, for receiving a random access response, RAR, message (RA Msg2) from a network node, the method comprising S11 transmitting a selected random access preamble (RA Msg1) to the network node, the selected preamble being linked to specific downlink (DL) resources, and S13 receiving the RA Msg2 from the network node on the specific DL resources. Thus, the preamble is linked to some DL resources, referred to as specific DL resources, that the network node will use for the RAR in response to receiving the preamble.

According to some aspects, the method may further comprise selecting a random access preamble to use for transmission to the network node, the random access preamble being linked to specific DL resources. The wireless device may select which preamble to use from available preambles for random access. This step is optional, since even if the wireless device is told which preamble to use, the method of the following steps are unaffected.

According to some aspects, the method may further comprise monitoring, based on the selected preamble, specific DL resources for the reception of the RA Msg2. This step is also considered optional since it could be seen as intrinsic in the receiving step.

A corresponding method, performed in a network node, for transmitting a random access response, RAR, message (RA Msg2) to a wireless device, will now be described referring to Figure 8. Figure 8 illustrates a method for use in a network node in a wireless communication system for transmitting a random access response, RAR, message (RA Msg2) to a wireless device, the method comprising receiving (S1) a random-access preamble (RA Msg1) from the wireless device, the random access preamble being linked to specific DL resources, and transmitting (S3) the RAR Msg2 to the wireless device on the specific DL resources. Thus, the network node will know based on which preamble is being received which resources to use for the RAR.

In one aspect, the method further comprises obtaining, based on the received random access preamble, specific DL resources to use for transmitting the RAR Msg2 to the wireless device. Obtaining may be by getting the resource indication in an related information, looking up in a table, having the information predefined or preconfigured in the network node. This step is optional since it may not be performed explicitly.

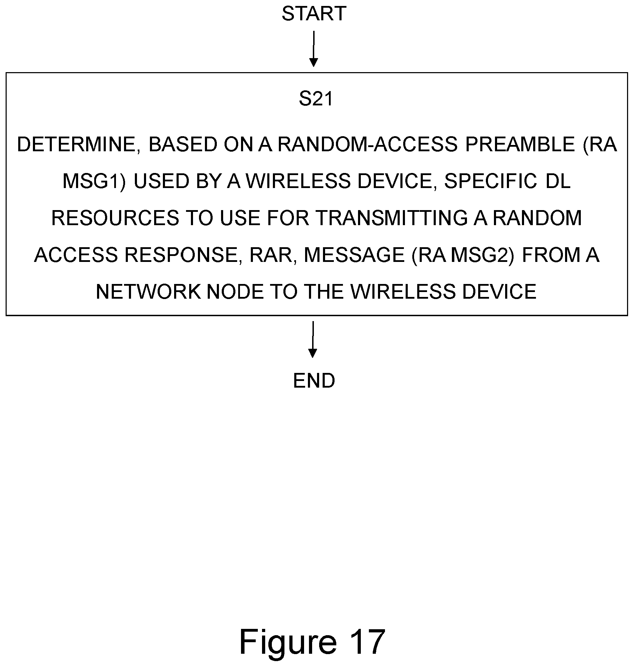

Figure 17 is a schematic flowchart illustrating an example of a method for resource selection for random access messages in a wireless communication system according to non-claimed embodiment. Basically, the method comprises the step S21 of determining, based on a random access preamble (RA Msg1) used by a wireless device, specific DL resources to use for transmitting a random access response, RAR, message (RA Msg2) from a network node to the wireless device. More specifically, the random access preamble belongs to one of a number of different sets or groups of preambles, and the specific DL resources to use for transmitting the RAR message (RA Msg2) are selected depending on which preamble set the random access preamble belongs to.

It will be appreciated that the methods and arrangements described herein can be implemented, combined and re-arranged in a variety of ways.

For example, embodiments may be implemented in hardware, or in software for execution by suitable processing circuitry, or a combination thereof.

The steps, functions, procedures, modules and/or blocks described herein may be implemented in hardware using any conventional technology, such as discrete circuit or integrated circuit technology, including both general-purpose electronic circuitry and application-specific circuitry.

Alternatively, or as a complement, at least some of the steps, functions, procedures, modules and/or blocks described herein may be implemented in software such as a computer program for execution by suitable processing circuitry such as one or more processors or processing units.

Examples of processing circuitry includes, but is not limited to, one or more microprocessors, one or more Digital Signal Processors (DSPs), one or more Central Processing Units (CPUs), video acceleration hardware, and/or any suitable programmable logic circuitry such as one or more Field Programmable Gate Arrays (FPGAs), or one or more Programmable Logic Controllers (PLCs).

It should also be understood that it may be possible to re-use the general processing capabilities of any conventional device or unit in which the proposed technology is implemented. It may also be possible to re-use existing software, e.g. by reprogramming of the existing software or by adding new software components.

According to an aspect of the present invention, there is provided a wireless device, configured to operate in a wireless communication system, and configured for receiving a random access response, RAR, message (RA Msg2) from a network node. The wireless device comprises:
- a communication interface configured for communication with the network node; and
- processing circuitry configured to cause the wireless device:
   to transmit a selected random access preamble (RA Msg1) to the network node, the selected preamble being linked to specific downlink (DL) resources to be used for communicating the RAR message (RA Msg2) from the network node to the wireless device; and
   to receive the RAR message (RA Msg2) from the network node on the specific DL resources.

In a particular example, the processing circuitry is further configured to cause the wireless device to select a random access preamble to use for transmission to the network node, the random access preamble being linked to specific DL resources to be used for communicating the RAR message (RA Msg2) from the network node to the wireless device.

By way of example, the processing circuitry may further be configured to cause the wireless device to monitor, based on the selected preamble, specific DL resources for the reception of the RAR message (RA Msg2).

According to another non-claimed aspect, there is provided a network node, configured to operate in a wireless communication system, and configured for transmitting a random access response, RAR, message (RA Msg2) to a wireless device. The network node comprises:
- a communication interface configured for communication with the wireless device; and
- processing circuitry configured to cause the network node:
   to receive a random-access preamble (RA Msg1) from the wireless device, the random access preamble being linked to specific DL resources to be used for communicating the RAR message (RA Msg2) from the network node to the wireless device; and
   to transmit the RAR message (RA Msg2) to the wireless device on the specific DL resources.

By way of example, the processing circuitry may further be configured to cause the network node to obtain, based on the received random access preamble, specific DL resources to use for transmitting the RAR message (RA Msg2) to the wireless device.

In a particular example, the random access preamble belongs to one of a number of different sets or groups of preambles, and the processing circuitry is further configured to cause the network node to select the specific DL resources to use for transmitting the RAR message (RA Msg2) depending on which preamble set the random access preamble belongs to.

According to a yet another non-claimed aspect, there is provided a wireless device configured to:
select a random access preamble to use for transmission to a network node, the selected random access preamble being linked to specific DL resources to be used for communicating the RAR message (RA Msg2) from the network node to the wireless device;
transmit the selected random access preamble (RA Msg1) to the network node;
monitor, based on the selected preamble, the specific DL resources for the reception of the RAR message (RA Msg2); and
receive the RAR message (RA Msg2) from the network node on the specific DL resources.

According to still another non-claimed aspect, there is provided a network node configured to:
receive a random access preamble (RA Msg1) from the wireless device, the random access preamble being linked to specific DL resources to be used for communicating a random access response, RAR, message (RA Msg2) from the network node to the wireless device;
obtain, based on the received random access preamble, the specific DL resources to use for transmitting the RAR message (RA Msg2) to the wireless device; and
transmit the RAR message (RA Msg2) to the wireless device on the specific DL resources.

There is also provided a non-claimed system configured to perform resource selection for random access messages in a wireless communication system,
wherein the system is configured to determine, based on a random access preamble (RA Msg1) used by a wireless device, specific DL resources to use for transmitting a random access response, RAR, message (RA Msg2) from a network node to the wireless device,
wherein the random access preamble belongs to one of a number of different sets or groups of preambles, and the specific DL resources to use for transmitting the RAR message (RA Msg2) are selected depending on which preamble set the random access preamble belongs to.

### Example Node Configurations

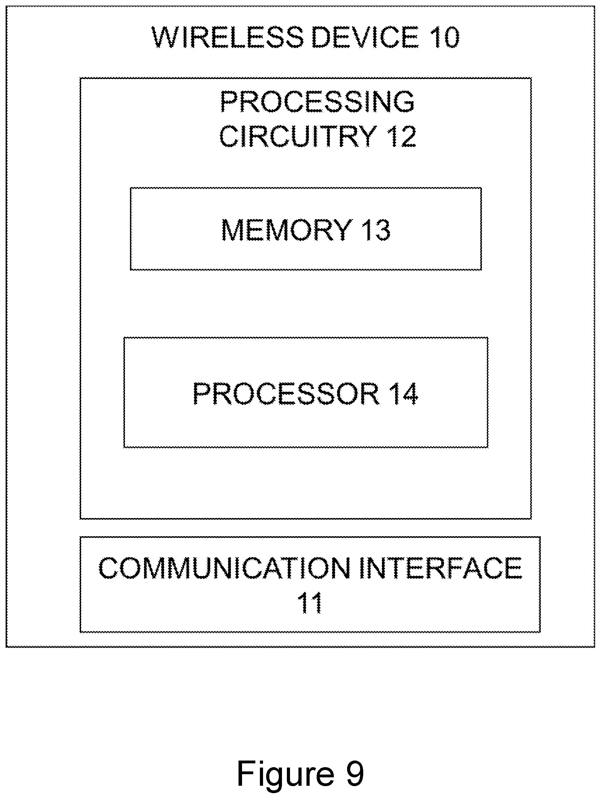

Turning now to Figure 9, which is a schematic diagram that illustrates some modules of an example non-claimed embodiment of a wireless device being configured for receiving a random access response, RAR, message (RA Msg2) from a network node 20. The wireless device is configured to implement all aspects of the methods described in relation to Figure 7.

The wireless device 10 comprises a radio communication interface (i/f) 11 configured for communication with a network node. The radio communication interface 11 may be adapted to communicate over one or several radio access technologies. If several technologies are supported, the node typically comprises several communication interfaces, e.g. one WLAN or Bluetooth communication interface and one cellular communication interface, including LTE or NR.

The wireless device 10 comprises a controller, CTL, or a processing circuitry 12 that may be constituted by any suitable Central Processing Unit, CPU, microcontroller, Digital Signal Processor, DSP, etc. capable of executing computer program code. The computer program may be stored in a memory, MEM 13. The memory 13 can be any combination of a Read And write Memory, RAM, and a Read Only Memory, ROM. The memory 13 may also comprise persistent storage, which, for example, can be any single one or combination of magnetic memory, optical memory, or solid state memory or even remotely mounted memory.

According to some aspects, the disclosure relates to a computer program comprising computer program code which, when executed, causes a wireless device to execute the methods described above and below. According to some aspects the disclosure pertains to a computer program product or a computer readable medium holding said computer program. The processing circuitry may further comprise both a memory 13 storing a computer program and a processor 14, the processor being configured to carry out the method of the computer program.

One embodiment includes a wireless device 10, configured to operate in a wireless communication system 100, configured for receiving a random access response, RAR, message (RA Msg2) from a network node 20. The wireless device 10 comprises a communication interface 11 configured for communication with the network node and processing circuitry 12 configured to cause the wireless device 10 to transmit a selected random access preamble (RA Msg1) to the network node 20, the selected preamble being linked to specific downlink (DL) resources; and to receive the RAR message (RA Msg2) from the network node 20 on the specific DL resources.

In one aspect, the processing circuitry 12 is further configured to select a random access preamble to use for transmission to the network node 20, the random access preamble being linked to specific DL resources. In a further aspect, the processing circuitry 12 is further configured to monitor, based on the selected preamble, specific DL resources for the reception of the RAR message (RA Msg2).

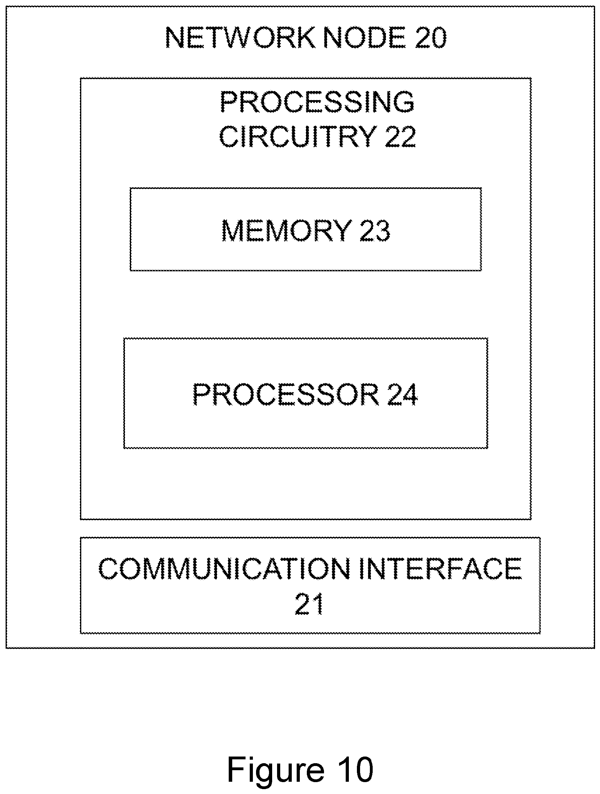

Figure 10 illustrates an example of a network node 20, which incorporates some of the example embodiments discussed above. Figure 10 discloses a network node 20 being configured to operate in a wireless communication system 100, configured for transmitting a random access response, RAR, message (RA Msg2) to a wireless device 10, the network node 20 comprising a communication interface 21 configured for communication with the wireless device; and processing circuitry 22 configured to cause the network node 20: to receive a random-access preamble (RA Msg1) from the wireless device 10, the random access preamble being linked to specific DL resources; and to transmit the RAR message (RA Msg2) to the wireless device 10 on the specific DL resources.

In one aspect, the processing circuitry 22 is further configured to obtain, based on the received random access preamble, specific DL resources to use for transmitting the RAR message (RA Msg2) to the wireless device 10.

As shown in Figure 10, the network node 20 comprises a radio communication interface or radio circuitry 21 configured to receive and transmit any form of communications or control signals within a network, including communication with the wireless device. It should be appreciated that the communication interface (radio circuitry) 21 is according to some aspects comprised as any number of transceiving, receiving, and/or transmitting units or circuitry. It should further be appreciated that the radio circuitry 21 can e.g. be in the form of any input/output communications port known in the art. The radio circuitry 21 e.g. comprises RF circuitry and baseband processing circuitry (not shown).

The network node 20 according to some aspects further comprises at least one memory unit or circuitry 23 that is in communication with the radio circuitry 21. The memory 23 can e.g. be configured to store received or transmitted data and/or executable program instructions. The memory 23 is e.g. configured to store any form of contextual data. The memory 23 can e.g. be any suitable type of computer readable memory and can e.g. be of volatile and/or nonvolatile type. The network node 20 further comprises processing circuitry 22 which configured to cause the network node 20 to receive a random-access preamble (RA Msg1) from the wireless device (10), the random access preamble being linked to specific DL resources, and to transmit the RAR Msg2 to the wireless device (10) on the specific DL resources.

The processing circuitry 22 is e.g. any suitable type of computation unit, e.g. a microprocessor, Digital Signal Processor, DSP, Field Programmable Gate Array, FPGA, or Application Specific Integrated Circuit, ASIC, or any other form of circuitry. It should be appreciated that the processing circuitry need not be provided as a single unit but is according to some aspects provided as any number of units or circuitry. The processing circuitry may thus comprise both a memory 23 for storing a computer program and a processor 24, the processor being configured to carry out the method of the computer program.

The controller, CTL, or processing circuitry 22 is according to some aspects capable of executing computer program code. The computer program is e.g. stored in a memory, MEM, 23. The memory 23 can be any combination of a Read And write Memory, RAM, and a Read Only Memory, ROM. The memory 23 in some situations also comprise persistent storage, which, for example, can be any single one or combination of magnetic memory, optical memory, or solid state memory or even remotely mounted memory. It should be appreciated that the processing circuitry need not be provided as a single unit but is according to some aspects provided as any number of units or circuitry.

According to some aspects, the disclosure relates to a non-claimed computer program comprising computer program code which, when executed, causes a network node to execute the methods described above and below.

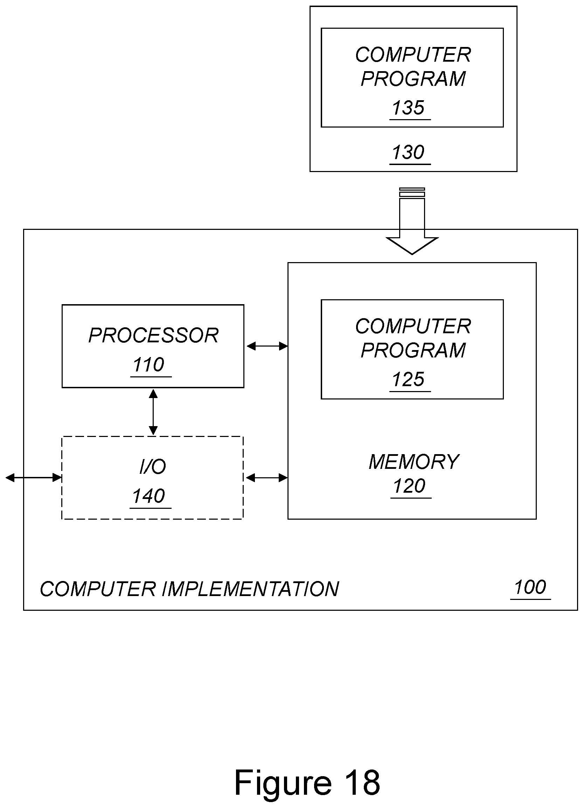

Reference can also be made to Figure 18, which illustrates a non-claimed example of a suitable computer-implementation.

In this particular example, at least some of the steps, functions, procedures, modules and/or blocks described herein are implemented in a computer program 125; 135, which is loaded into memory 120 for execution by processing circuitry including one or more processors 110. The processor(s) 110 and memory 120 are interconnected to each other to enable normal software execution. An optional input/output device 140 may also be interconnected to the processor(s) 110 and/or the memory 120 to enable input and/or output of relevant data such as input parameter(s) and/or resulting output parameter(s).

The term 'processor' should be interpreted in a general sense as any system or device capable of executing program code or computer program instructions to perform a particular processing, determining or computing task.

The processing circuitry including one or more processors 110 is thus configured to perform, when executing the computer program 125, well-defined processing tasks such as those described herein.

The processing circuitry does not have to be dedicated to only execute the above-described steps, functions, procedure and/or blocks, but may also execute other tasks.

The proposed technology also relates to a system configured to perform resource selection for random access messages in a wireless communication system. The system is configured to determine, based on a random access preamble (RA Msg1) used by a wireless device, specific DL resources to use for transmitting a random access response, RAR, message (RA Msg2) from a network node to the wireless device. More specifically, the random access preamble belongs to one of a number of different sets or groups of preambles, and the specific DL resources to use for transmitting the RAR message (RA Msg2) are selected depending on which preamble set the random access preamble belongs to.

By way of example, the system for resource selection for random access messages may also be implemented in a processor-memory-based implementation, as described above.

It should be understood that alternatively, or as a complement, the steps, functions, procedures, modules and/or blocks described herein may be implemented in hardware using any conventional technology, such as discrete circuit or integrated circuit technology, including both general-purpose electronic circuitry and application-specific circuitry.

In the following, examples of various optional embodiments will be described:

### Random-access resources

In NR, a random-access procedure can be initiated by a UE in idle/inactive state as well as by a UE in connected state. In the former case, the random access is typically initiated with the aim to request a connection set up. In the latter case, the random access may, for example, be initiated with the aim to request resources for uplink data transmission.

For a UE in idle/inactive-state the relation between random-access-related transmissions and bandwidth parts (BWPs) is relatively straightforward:
- Random-access-related downlink transmissions (Random-Access Message 2 and Message 4) can be assumed to be transmitted within the initial downlink BWP, i.e. the downlink bandwidth part assigned to all devices in idle state by means of system information.
- Uplink Random-Access Message 3 and possible HARQ feedback related to Message 4 can be assumed to be transmitted within the corresponding initial uplink BWP
- The random-access preamble can be assumed to be transmitted within a frequency range that is fully confined within the frequency range of the initial uplink BWP (one cannot really say that the preamble is transmitted *within* the initial uplink BWP as a BWP is numerology specific and the preamble may very well have a different numerology).

In connected state, the relation between random-access-related transmissions and bandwidth part is more complex as the UE may have active BWPs (downlink and/or uplink) that do not cover the frequency-domain resources on which the random-access-related transmissions are to take place. Thus, there is a potential conflict between random-access-related transmission/reception and potential other UE transmission/reception, transmissions/reception which the network assumes will take place within the active downlink/uplink BWPs.

For the uplink, this can relatively easily be handled. If a UE is initiating random access on an uplink frequency resource not confined within its active uplink BWP and, for some reason, the UE needs to transmit within its active uplink BWP (for example to provide Hybrid ARQ feedback for downlink transmissions) before the random-access procedure has been ended, it can in most case switch back to its original active uplink BWP for the transmission

For the downlink, the situation is more complex. There are three possible scenarios:
- The random-access-related downlink transmissions take place within the UE active downlink BWP.
- The random-access-related downlink transmissions take place within a downlink BWP different from the UE active downlink BWP but such that the UE active downlink BWP is fully confined within this "random-access" downlink BWP. A typical case is when the active downlink BWP is relatively narrow band (to reduce UE energy consumption by means of "bandwidth adaptation") and the random-access-related transmissions are within a more wideband BWP fully covering the more narrowband BWP
- The random-access-related downlink transmissions take place within a downlink BWP different from the UE active downlink BWP such that the UE cannot simultaneously receive on the active downlink BWP and the "random-access" downlink BWP.

In the first two scenarios, the UE can receive on its active downlink BWP while monitoring for random-access related downlink transmissions on the "random access" downlink BWP. However, in the third scenario this is not possible. Thus, during the random-access procedure the connected-mode UE cannot be reached by the network as the network is not aware of the random-access attempt and thus assumes that the UE is still able to receive on the active downlink BWP.

According to a first optional embodiment, each configured *downlink* BWP is associated with a random-access configuration providing information about:
- What downlink BWP to be used for the random-access-related downlink transmissions (Message 2 and Message 4) if a random-access is initiated when the configured BWP is active. This "random-access" downlink BWP should include a common search space. *Typical cases could be:*
   o *The downlink bandwidth part in the RA configuration (the "random-access" downlink BWP) is the configured downlink BWP itself*
   o *The downlink bandwidth part in the RA configuration is a super-set of the configured downlink BWP*
   o *The downlink bandwidth part in the RA configuration is the default downlink BWP configured for the UE*
- What uplink BWP to be used for transmission of Message 3 and potential Hybrid-ARQ feedback related to Message 4
- The preamble configuration (time/frequency resource(s) and preamble format(s)). *It seems reasonable to assume that the preamble should be fully confined within the frequency range of the uplink BWP for Message 3 (second bullet above)*

It is up to the network to ensure that, based on a received preamble, it can determine on what downlink BWP(s) to transmit the random-access-related downlink transmissions.

### Random-access resources and BWP timer

A BWP-related timer is configured with the following properties:
- A UE starts the timer when switching to a new active downlink BWP
- The UE restarts the timer when scheduled on the active downlink BWP
- When the timer expires, the UE activates a default downlink BWP

However, it is not obvious how this BWP timer would interact with connected-state random access. Several alternatives are proposed:
- The timer continuous to run during the random-access procedure and if the timer expires the UE switches to the default downlink BWP thus missing any still unreceived downlink random-access-related transmissions
- The timer continuous to run during the random-access procedure and if the timer expires the UE switches to the default downlink BWP once the random-access procedure has ended
- The timer is stopped during the random-access procedure and restarted once the the random-access procedure has ended
- The timer is stopped during the random-access procedure and reset once the random-access procedure has ended

A connected-state UE may have initiated random access to request resources or to reestablish synchronization. This is not solved by the UE switching to the default BWP before concluding the random-access. Thus, it seems appropriate that the UE should try to conclude the random access before any bandwidth switch triggered by timer expiration.

It can also be argued that a successful connected-state random access should be seen as a kind of UE scheduling and thus, the time expires, but the random access is successful, the UE should not switch to the default BWP but return to its previous active downlink NWP:
The BWP timer continues to run during the random-access procedure. If the timer expires during the random-access procedure, the random-access procedure continues until concluded
- If the timer has expired and the random access is successfully concluded, the device returns to the previously (before initiating the random-access procedure) BWP with a reset timer
- If the timer has expired and the random access is unsuccessfully concluded, the device switch to the default BWP.

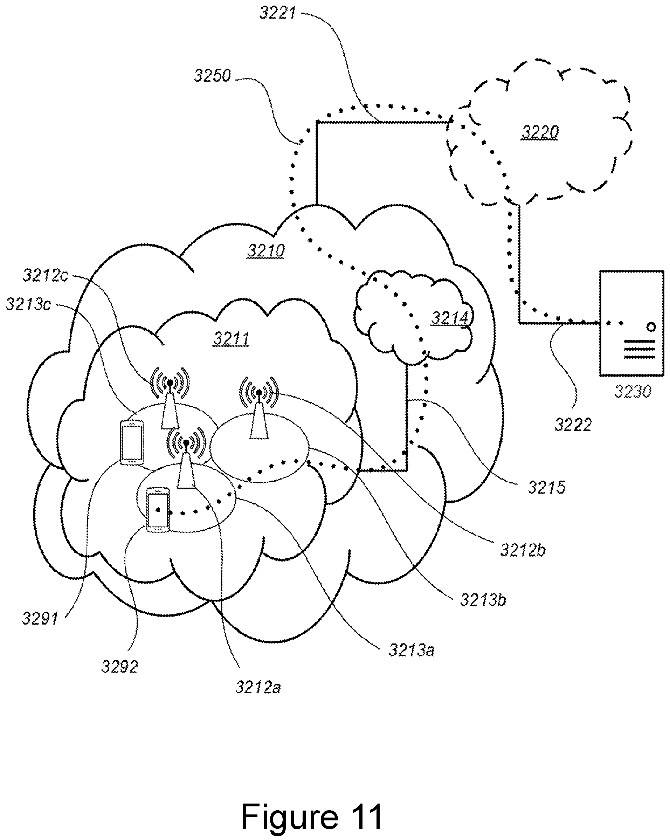

With reference to Figure 11, in accordance with a non-claimed embodiment, a communication system includes a telecommunication network 3210, such as a 3GPP-type cellular network, which comprises an access network 3211, such as a radio access network, and a core network 3214. The access network 3211 comprises a plurality of base stations 3212a, 3212b, 3212c, such as NBs, eNBs, gNBs or other types of wireless access points, each defining a corresponding coverage area 3213a, 3213b, 3213c. Each base station 3212a, 3212b, 3212c is connectable to the core network 3214 over a wired or wireless connection 3215. A first user equipment (UE) 3291 located in coverage area 3213c is configured to wirelessly connect to, or be paged by, the corresponding base station 3212c. A second UE 3292 in coverage area 3213a is wirelessly connectable to the corresponding base station 3212a. While a plurality of UEs 3291, 3292 are illustrated in this example, the disclosed embodiments are equally applicable to a situation where a sole UE is in the coverage area or where a sole UE is connecting to the corresponding base station 3212.

The telecommunication network 3210 is itself connected to a host computer 3230, which may be embodied in the hardware and/or software of a standalone server, a cloud-implemented server, a distributed server or as processing resources in a server farm. The host computer 3230 may be under the ownership or control of a service provider, or may be operated by the service provider or on behalf of the service provider. The connections 3221, 3222 between the telecommunication network 3210 and the host computer 3230 may extend directly from the core network 3214 to the host computer 3230 or may go via an optional intermediate network 3220. The intermediate network 3220 may be one of, or a combination of more than one of, a public, private or hosted network; the intermediate network 3220, if any, may be a backbone network or the Internet; in particular, the intermediate network 3220 may comprise two or more sub-networks (not shown).

The communication system of Figure 11 as a whole enables connectivity between one of the connected UEs 3291, 3292 and the host computer 3230. The connectivity may be described as an over-the-top (OTT) connection 3250. The host computer 3230 and the connected UEs 3291, 3292 are configured to communicate data and/or signaling via the OTT connection 3250, using the access network 3211, the core network 3214, any intermediate network 3220 and possible further infrastructure (not shown) as intermediaries. The OTT connection 3250 may be transparent in the sense that the participating communication devices through which the OTT connection 3250 passes are unaware of routing of uplink and downlink communications. For example, a base station 3212 may not or need not be informed about the past routing of an incoming downlink communication with data originating from a host computer 3230 to be forwarded (e.g., handed over) to a connected UE 3291. Similarly, the base station 3212 need not be aware of the future routing of an outgoing uplink communication originating from the UE 3291 towards the host computer 3230.

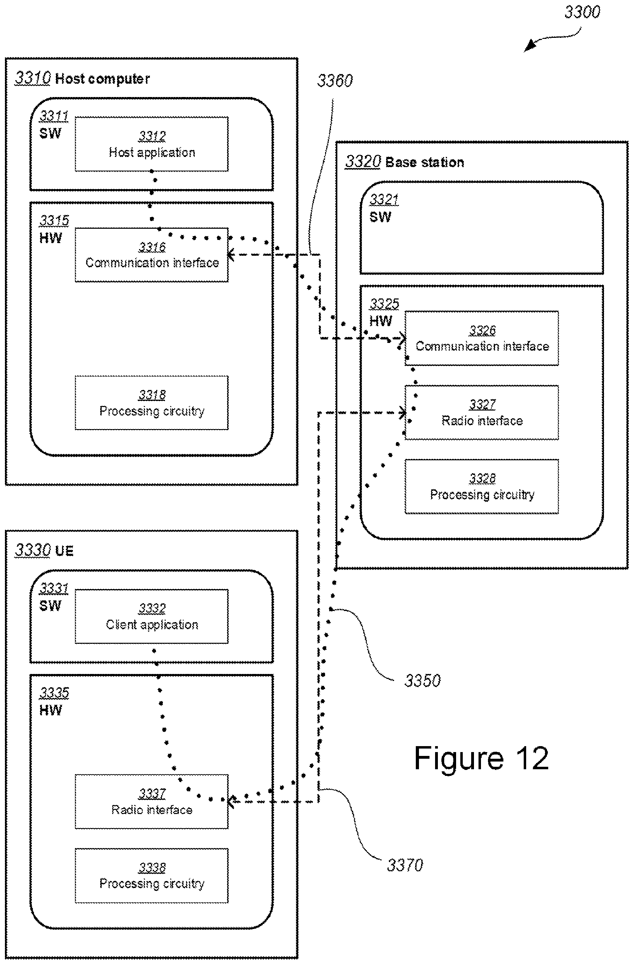

Example implementations, in accordance with an embodiment, of the UE, base station and host computer discussed in the preceding paragraphs will now be described with reference to Figure 12. In a communication system 3300, a host computer 3310 comprises hardware 3315 including a communication interface 3316 configured to set up and maintain a wired or wireless connection with an interface of a different communication device of the communication system 3300. The host computer 3310 further comprises processing circuitry 3318, which may have storage and/or processing capabilities. In particular, the processing circuitry 3318 may comprise one or more programmable processors, application-specific integrated circuits, field programmable gate arrays or combinations of these (not shown) adapted to execute instructions. The host computer 3310 further comprises software 3311, which is stored in or accessible by the host computer 3310 and executable by the processing circuitry 3318. The software 3311 includes a host application 3312. The host application 3312 may be operable to provide a service to a remote user, such as a UE 3330 connecting via an OTT connection 3350 terminating at the UE 3330 and the host computer 3310. In providing the service to the remote user, the host application 3312 may provide user data which is transmitted using the OTT connection 3350.

The communication system 3300 further includes a base station 3320 provided in a telecommunication system and comprising hardware 3325 enabling it to communicate with the host computer 3310 and with the UE 3330. The hardware 3325 may include a communication interface 3326 for setting up and maintaining a wired or wireless connection with an interface of a different communication device of the communication system 3300, as well as a radio interface 3327 for setting up and maintaining at least a wireless connection 3370 with a UE 3330 located in a coverage area (not shown in Figure 12) served by the base station 3320. The communication interface 3326 may be configured to facilitate a connection 3360 to the host computer 3310. The connection 3360 may be direct or it may pass through a core network (not shown in Figure 12) of the telecommunication system and/or through one or more intermediate networks outside the telecommunication system. In the embodiment shown, the hardware 3325 of the base station 3320 further includes processing circuitry 3328, which may comprise one or more programmable processors, application-specific integrated circuits, field programmable gate arrays or combinations of these (not shown) adapted to execute instructions. The base station 3320 further has software 3321 stored internally or accessible via an external connection.

The communication system 3300 further includes the UE 3330 already referred to. Its' hardware 3335 may include a radio interface 3337 configured to set up and maintain a wireless connection 3370 with a base station serving a coverage area in which the UE 3330 is currently located. The hardware 3335 of the UE 3330 further includes processing circuitry 3338, which may comprise one or more programmable processors, application-specific integrated circuits, field programmable gate arrays or combinations of these (not shown) adapted to execute instructions. The UE 3330 further comprises software 3331, which is stored in or accessible by the UE 3330 and executable by the processing circuitry 3338. The software 3331 includes a client application 3332. The client application 3332 may be operable to provide a service to a human or non-human user via the UE 3330, with the support of the host computer 3310. In the host computer 3310, an executing host application 3312 may communicate with the executing client application 3332 via the OTT connection 3350 terminating at the UE 3330 and the host computer 3310. In providing the service to the user, the client application 3332 may receive request data from the host application 3312 and provide user data in response to the request data. The OTT connection 3350 may transfer both the request data and the user data. The client application 3332 may interact with the user to generate the user data that it provides.

It is noted that the host computer 3310, base station 3320 and UE 3330 illustrated in Figure 12 may be identical to the host computer 3230, one of the base stations 3212a, 3212b, 3212c and one of the UEs 3291, 3292 of Figure 11, respectively. This is to say, the inner workings of these entities may be as shown in Figure 12 and independently, the surrounding network topology may be that of Figure 11.

In Figure 12, the OTT connection 3350 has been drawn abstractly to illustrate the communication between the host computer 3310 and the use equipment 3330 via the base station 3320, without explicit reference to any intermediary devices and the precise routing of messages via these devices. Network infrastructure may determine the routing, which it may be configured to hide from the UE 3330 or from the service provider operating the host computer 3310, or both. While the OTT connection 3350 is active, the network infrastructure may further take decisions by which it dynamically changes the routing (e.g., on the basis of load balancing consideration or reconfiguration of the network).

The wireless connection 3370 between the UE 3330 and the base station 3320 is in accordance with the teachings of the embodiments described throughout this disclosure. One or more of the various embodiments improve the performance of OTT services provided to the UE 3330 using the OTT connection 3350, in which the wireless connection 3370 forms the last segment. More precisely, the teachings of these embodiments may improve the reception of messages for connection and thereby provide benefits such as better system robustness, better responsiveness, shorter waiting times for connection set-ups etc.

A measurement procedure may be provided for the purpose of monitoring data rate, latency and other factors on which the one or more embodiments improve. There may further be an optional network functionality for reconfiguring the OTT connection 3350 between the host computer 3310 and UE 3330, in response to variations in the measurement results. The measurement procedure and/or the network functionality for reconfiguring the OTT connection 3350 may be implemented in the software 3311 of the host computer 3310 or in the software 3331 of the UE 3330, or both. In embodiments, sensors (not shown) may be deployed in or in association with communication devices through which the OTT connection 3350 passes; the sensors may participate in the measurement procedure by supplying values of the monitored quantities exemplified above, or supplying values of other physical quantities from which software 3311, 3331 may compute or estimate the monitored quantities. The reconfiguring of the OTT connection 3350 may include message format, retransmission settings, preferred routing etc.; the reconfiguring need not affect the base station 3320, and it may be unknown or imperceptible to the base station 3320. Such procedures and functionalities may be known and practiced in the art. In certain embodiments, measurements may involve proprietary UE signaling facilitating the host computer's 3310 measurements of throughput, propagation times, latency and the like. The measurements may be implemented in that the software 3311, 3331 causes messages to be transmitted, in particular empty or 'dummy' messages, using the OTT connection 3350 while it monitors propagation times, errors etc.

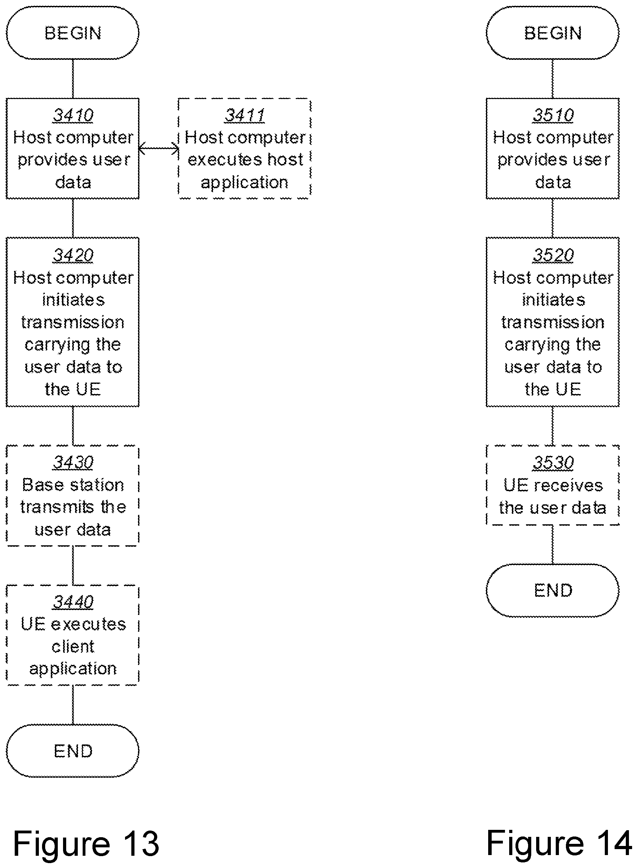

Figure 13 is a flowchart illustrating a method implemented in a communication system, in accordance with a non-claimed embodiment. The communication system includes a host computer, a base station and a UE which may be those described with reference to Figures 11 and 12. For simplicity of the present disclosure, only drawing references to Figure 13 will be included in this section. In a first step 3410 of the method, the host computer provides user data. In an optional substep 3411 of the first step 3410, the host computer provides the user data by executing a host application. In a second step 3420, the host computer initiates a transmission carrying the user data to the UE. In an optional third step 3430, the base station transmits to the UE the user data which was carried in the transmission that the host computer initiated, in accordance with the teachings of the embodiments described throughout this disclosure. In an optional fourth step 3440, the UE executes a client application associated with the host application executed by the host computer.

Figure 14 is a flowchart illustrating a method implemented in a communication system, in accordance with a non-claimed embodiment. The communication system includes a host computer, a base station and a UE which may be those described with reference to Figures 11 and 12. For simplicity of the present disclosure, only drawing references to Figure 14 will be included in this section. In a first step 3510 of the method, the host computer provides user data. In an optional substep (not shown) the host computer provides the user data by executing a host application. In a second step 3520, the host computer initiates a transmission carrying the user data to the UE. The transmission may pass via the base station, in accordance with the teachings of the embodiments described throughout this disclosure. In an optional third step 3530, the UE receives the user data carried in the transmission.

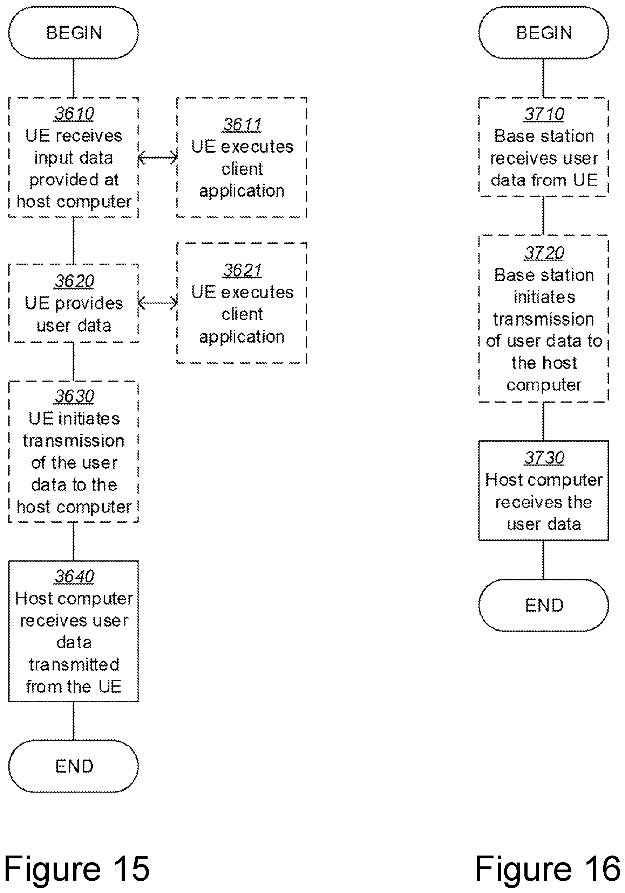

Figure 15 is a flowchart illustrating a method implemented in a communication system, in accordance with a non-claimed embodiment. The communication system includes a host computer, a base station and a UE which may be those described with reference to Figures 11 and 12. For simplicity of the present disclosure, only drawing references to Figure 15 will be included in this section. In an optional first step 3610 of the method, the UE receives input data provided by the host computer. Additionally or alternatively, in an optional second step 3620, the UE provides user data. In an optional substep 3621 of the second step 3620, the UE provides the user data by executing a client application. In a further optional substep 3611 of the first step 3610, the UE executes a client application which provides the user data in reaction to the received input data provided by the host computer. In providing the user data, the executed client application may further consider user input received from the user. Regardless of the specific manner in which the user data was provided, the UE initiates, in an optional third substep 3630, transmission of the user data to the host computer. In a fourth step 3640 of the method, the host computer receives the user data transmitted from the UE, in accordance with the teachings of the embodiments described throughout this disclosure.

Figure 16 is a flowchart illustrating a method implemented in a communication system, in accordance with a non-claimed embodiment. The communication system includes a host computer, a base station and a UE which may be those described with reference to Figures 11 and 12. For simplicity of the present disclosure, only drawing references to Figure 16 will be included in this section. In an optional first step 3710 of the method, in accordance with the teachings of the embodiments described throughout this disclosure, the base station receives user data from the UE. In an optional second step 3720, the base station initiates transmission of the received user data to the host computer. In a third step 3730, the host computer receives the user data carried in the transmission initiated by the base station.

According to some aspects the processing circuitry 12 or the wireless device 10 comprises units configured to perform the methods described above. The units are implemented in hardware or in software or in a combination thereof. The modules are according to one aspect implemented as a computer program stored in a memory 13 which run on the processing circuitry 12.

According to some aspects the processing circuitry 22 or the network node comprise units configured to perform the methods described above. The units are implemented in hardware or in software or in a combination thereof. The modules are according to one aspect implemented as a computer program stored in a memory 23 which run on the processing circuitry 22.

The content of this disclosure thus enables reliable low latency reception of the RAR from the gNB in the UE, since the UE knows in which resources the RAR will come, depending on the preamble the use transmitted to the gNB.

Aspects of the disclosure are described with reference to the drawings, e.g., block diagrams and/or flowcharts. It is understood that several entities in the drawings, e.g., blocks of the block diagrams, and also combinations of entities in the drawings, can be implemented by computer program instructions, which instructions can be stored in a computer-readable memory, and also loaded onto a computer or other programmable data processing apparatus. Such computer program instructions can be provided to a processor of a general purpose computer, a special purpose computer and/or other programmable data processing apparatus to produce a machine, such that the instructions, which execute via the processor of the computer and/or other programmable data processing apparatus, create means for implementing the functions/acts specified in the block diagrams and/or flowchart block or blocks.

The flow diagram or diagrams presented herein may be regarded as a computer flow diagram or diagrams, when performed by one or more processors. A corresponding apparatus may be defined as a group of function modules, where each step performed by the processor corresponds to a function module. In this case, the function modules are implemented as a computer program running on the processor.

The computer program residing in memory may thus be organized as appropriate function modules configured to perform, when executed by the processor, at least part of the steps and/or tasks described herein.

Alternatively it is possible to realize such module(s) predominantly by hardware modules, or alternatively by hardware, with suitable interconnections between relevant modules. Particular examples include one or more suitably configured digital signal processors and other known electronic circuits, e.g. discrete logic gates interconnected to perform a specialized function, and/or Application Specific Integrated Circuits (ASICs) as previously mentioned. Other examples of usable hardware include input/output (I/O) circuitry and/or circuitry for receiving and/or sending signals. The extent of software versus hardware is purely implementation selection.

In the drawings and specification, there have been disclosed exemplary aspects of the disclosure. However, many variations and modifications can be made to these aspects without substantially departing from the principles of the present disclosure. Thus, the disclosure should be regarded as illustrative rather than restrictive, and not as being limited to the particular aspects discussed above. Accordingly, although specific terms are employed, they are used in a generic and descriptive sense only and not for purposes of limitation.

The description of the example embodiments provided herein have been presented for purposes of illustration. The description is not intended to be exhaustive or to limit example embodiments to the precise form disclosed, and modifications and variations are possible in light of the above teachings or may be acquired from practice of various alternatives to the provided embodiments. The examples discussed herein were chosen and described in order to explain the principles and the nature of various example embodiments and its practical application to enable one skilled in the art to utilize the example embodiments in various manners and with various modifications as are suited to the particular use contemplated. The features of the embodiments described herein may be combined in all possible combinations of methods, apparatus, modules, systems, and computer program products. It should be appreciated that the example embodiments presented herein may be practiced in any combination with each other.

It should be noted that the word "comprising" does not necessarily exclude the presence of other elements or steps than those listed and the words "a" or "an" preceding an element do not exclude the presence of a plurality of such elements. It should further be noted that any reference signs do not limit the scope of the claims, that the example embodiments may be implemented at least in part by means of both hardware and software, and that several "means", "units" or "devices" may be represented by the same item of hardware.

The various example embodiments described herein are described in the general context of method steps or processes, which may be implemented in one aspect by a computer program product, embodied in a computer-readable medium, including computer-executable instructions, such as program code, executed by computers in networked environments. A computer-readable medium may include removable and non-removable storage devices including, but not limited to, Read Only Memory (ROM), Random Access Memory (RAM), compact discs (CDs), digital versatile discs (DVD), etc. Generally, program modules may include routines, programs, objects, components, data structures, etc. that performs particular tasks or implement particular abstract data types. Computer-executable instructions, associated data structures, and program modules represent examples of program code for executing steps of the methods disclosed herein. The particular sequence of such executable instructions or associated data structures represents examples of corresponding acts for implementing the functions described in such steps or processes. Reference can once again be made to previously described Figure 18, which is a schematic block diagram illustrating an example of a computer-implementation according to a non-claimed embodiment.

Further, embodiments relating to non-claimed host computer and activities therein, is also comprised in the current disclosure. A host computer (or server, or application server), which is under the ownership or control of a service provider, or which is operated by the service provider or on their behalf is connected to the RAN (e.g., cellular network) via the core network.

In one aspect is comprised a user equipment (UE) or wireless device configured to communicate with a base station or network node, the UE comprising a radio interface and processing circuitry configured to transmit a selected random access preamble (RA Msg1) to the network node, the selected preamble being linked to specific downlink (DL) resources; and to receive the RA Msg2 from the network node on the specific DL resources.

In a further non-claimed aspect is comprised a communication system including a host computer comprising: a communication interface configured to receive user data originating from a transmission from a user equipment (UE) to a base station, wherein the UE comprises a radio interface and processing circuitry, the UE's processing circuitry configured to transmit a selected random access preamble (RA Msg1) to the network node, the selected preamble being linked to specific downlink (DL) resources; and to receive the RA Msg2 from the network node on the specific DL resources.

In a non-claimed aspect, the communication system further includes the UE. In another aspect, the communication system further includes the base station, wherein the base station comprises a radio interface configured to communicate with the UE and a communication interface configured to forward to the host computer the user data carried by a transmission from the UE to the base station. In a further aspect, the processing circuitry of the host computer is configured to execute a host application; and the UE's processing circuitry is configured to execute a client application associated with the host application, thereby providing the user data. In a further aspect the processing circuitry of the host computer is configured to execute a host application, thereby providing request data; and the UE's processing circuitry is configured to execute a client application associated with the host application, thereby providing the user data in response to the request data.

In a further non-claimed aspect is comprised a method implemented in a UE, comprising transmitting (S11) a selected random access preamble (RA Msg1) to the network node, the selected preamble being linked to specific downlink (DL) resources; and receiving (S13) the RA Msg2 from the network node on the specific DL resources. In one aspect, the method further comprises providing user data; and forwarding the user data to a host computer via the transmission to the base station.

In a further non-claimed embodiment is defined a method implemented in a communication system including a host computer, a base station and a user equipment (UE), the method comprising: at the host computer, receiving user data transmitted to the base station from the UE, wherein the UE transmits a selected random access preamble (RA Msg1) to the network node, the selected preamble being linked to specific downlink (DL) resources; and receives the RA Msg2 from the network node on the specific DL resources. In one aspect, the method further comprising, at the UE, providing the user data to the base station. The method further comprising: at the UE, executing a client application, thereby providing the user data to be transmitted; and at the host computer, executing a host application associated with the client application. The method further comprising: at the UE, executing a client application; and at the UE, receiving input data to the client application, the input data being provided at the host computer by executing a host application associated with the client application, wherein the user data to be transmitted is provided by the client application in response to the input data.

In a further non-claimed embodiment is comprised a base station configured to communicate with a user equipment (UE), the base station comprising a radio interface and processing circuitry configured to receive a random-access preamble (RA Msg1) from the wireless device (10), the random access preamble being linked to specific DL resources; and to transmit the RAR Msg2 to the wireless device (10) on the specific DL resources.

In a further non-claimed embodiment is comprised a communication system including a host computer comprising: processing circuitry configured to provide user data; and a communication interface configured to forward the user data to a cellular network for transmission to a user equipment (UE), wherein the cellular network comprises a base station having a radio interface and processing circuitry, the base station's processing circuitry configured to receive a random-access preamble (RA Msg1) from the wireless device (10), the random access preamble being linked to specific DL resources; and to transmit the RAR Msg2 to the wireless device (10) on the specific DL resources.

In a non-claimed aspect, the communication system further includes the base station. In a further aspect, the communication system further includes the UE, wherein the UE is configured to communicate with the base station. In a further aspect is provided the communication system, wherein: the processing circuitry of the host computer is configured to execute a host application, thereby providing the user data; and the UE comprises processing circuitry configured to execute a client application associated with the host application.

In a further non-claimed embodiment is comprised a method implemented in a base station, comprising receiving (S1) a random-access preamble (RA Msg1) from the wireless device, the random access preamble being linked to specific DL resources; and transmitting (S3) the RAR Msg2 to the wireless device on the specific DL resources.

In a further non-claimed embodiment is comprised a method implemented in a communication system including a host computer, a base station and a user equipment (UE), the method comprising: at the host computer, providing user data; and at the host computer, initiating a transmission carrying the user data to the UE via a cellular network comprising the base station, wherein the base station receives a random-access preamble (RA Msg1) from the wireless device, the random access preamble being linked to specific DL resources; and transmits the RAR Msg2 to the wireless device on the specific DL resources. In one aspect, the method further comprises: at the base station, transmitting the user data. In a further aspect, wherein the user data is provided at the host computer by executing a host application, the method further comprises: at the UE, executing a client application associated with the host application.

In a further non-claimed embodiment is comprised a communication system including a host computer comprising: processing circuitry configured to provide user data; and a communication interface configured to forward user data to a cellular network for transmission to a user equipment (UE), wherein the UE comprises a radio interface and processing circuitry, the UE's processing circuitry configured to transmit a selected random access preamble (RA Msg1) to the network node, the selected preamble being linked to specific downlink (DL) resources; and to receive the RA Msg2 from the network node on the specific DL resources. In one aspect, the communication system further includes the UE. In a further aspect is provided the communication system, wherein the cellular network further includes a base station configured to communicate with the UE. In a further aspect is provided the communication system of embodiment as above, wherein: the processing circuitry of the host computer is configured to execute a host application, thereby providing the user data; and the UE's processing circuitry is configured to execute a client application associated with the host application.

The embodiments described above are merely given as examples, and it should be understood that the proposed technology is not limited thereto. It will be understood by those skilled in the art that various modifications, combinations and changes may be made to the embodiments without departing from the present scope as defined by the appended claims. In particular, different part solutions in the different embodiments can be combined in other configurations, where technically possible.

## Claims

1. A method, performed by a wireless device in a wireless communication system, for receiving a random access response, RAR, message ,RA Msg2, from a network node, the method comprising:
transmitting (S11) a selected random access preamble ,RA Msg1, to the network node, the selected preamble being linked to specific downlink ,DL, resources to be used for communicating the RAR message ,RA Msg2, from the network node to the wireless device; and
receiving (S13) the RAR message ,RA Msg2, from the network node on the specific DL resources;
**characterized in that** the wireless device comprises a Bandwidth Part, BWP, related timer wherein:
- the wireless device starts the BWP- related timer when switching to a new active downlink BWP,
- the wireless device restarts the BWP-related timer when scheduled on the active downlink BWP, and
- the wireless device activates a default downlink BWP when the BWP-related timer expires, and
wherein the BWP-related timer continues to run during the random-access procedure, and if the BWP-related timer expires during the random-access procedure, the random-access procedure continues until concluded,
wherein if the BWP-related timer has expired and the random access is successfully concluded, the wireless device returns to the BWP used before initiating the random-access procedure with a reset of the BWP-related timer,
wherein if the BWP-related timer has expired and the random access is unsuccessfully concluded, the wireless device switches to the default BWP.

2. The method of claim 1 further comprising:
selecting (S10) a random access preamble to use for transmission to the network node, the random access preamble being linked to specific DL resources to be used for communicating the RAR message ,RA Msg2, from the network node to the wireless device.

3. The method of claim 1, wherein the wireless device is informed about which selected preamble to use.

4. The method of any of the claims 2-3, wherein the random access preamble is selected from available preambles for random access.

5. The method of any of the claims 1-4, further comprising:
monitoring (S12), based on the selected preamble, the corresponding specific DL resources for the reception of the RAR message ,RA Msg2.

6. The method of any of the claims 1-5, wherein the selected random access preamble is part of a preamble subset of available random access preambles, and wherein the specific DL resources are linked to the preamble subset that the selected random access preamble is part of.

7. The method of claim 6, wherein the available random access preambles are divided into two or more subsets.

8. The method of any of the claims 6-7, wherein the available random access preambles are divided into two subsets, A and B, and wherein the subset A is used for contention-based random access and the subset B is used for contention-free random access.

9. The method of claim 8, wherein the specific DL resources are resources A if the selected random access preamble is part of subset A, and resources B if the selected random access preamble is part of subset B.

10. The method of any of the claims 8-9, wherein the specific DL resources include a common resource for contention-based random access, and the specific DL resources include the current active bandwidth part, BWP, of the wireless device for contention-free random access.

11. The method of any of the claims 1-10, wherein the specific DL resources are one or more of:
a Control Resource Set CORESET,
a Bandwidth Part, BWP, or
a search space to monitor.

12. The method of any of the claims 1-11, wherein the method is performed for connected-state random access for a wireless device in connected state.

13. A wireless device (10), configured to operate in a wireless communication system (100), and configured for receiving a random access response, RAR, message ,RA Msg2, from a network node (20), the wireless device (10) comprising:
- a communication interface (11) configured for communication with the network node; and
- processing circuitry (12) configured to cause the wireless device (10):
to transmit a selected random access preamble ,RA Msg1, to the network node, the selected preamble being linked to specific downlink, DL, resources to be used for communicating the RAR message ,RA Msg2, from the network node to the wireless device; and
to receive the RAR message ,RA Msg2, from the network node on the specific DL resources;
**characterized in that** the wireless device comprises a Bandwidth Part, BWP, related timer with the following properties:
- the wireless device starts the BWP-related timer when switching to a new active downlink BWP,
- the wireless device is configured to restart the BWP-related timer when scheduled on the active downlink BWP, and
- the wireless device activates a default downlink BWP when the BWP-related timer expires, and
wherein the BWP-related timer continues to run during the random-access procedure, and if the BWP-related timer expires during the random-access procedure, the random-access procedure continues until concluded,
wherein if the BWP-related timer has expired and the random access is successfully concluded, the wireless device is configured to return to the BWP used before initiating the random-access procedure with a reset of the BWP-related timer,
wherein if the BWP-related timer has expired and the random access is unsuccessfully concluded, the wireless device is configured to switch to the default BWP.

14. The wireless device (10) of claim 13, wherein the processing circuitry (12) is further configured to cause the wireless device (10):
to select a random access preamble to use for transmission to the network node (20), the random access preamble being linked to specific DL resources to be used for communicating the RAR message ,RA Msg2, from the network node to the wireless device.

15. The wireless device (10) of any of the claims 13-14, wherein the processing circuitry (12) is further configured to cause the wireless device (10):
to monitor, based on the selected preamble, specific DL resources for the reception of the RAR message ,RA Msg2.

## Patentansprüche

1. Verfahren, das durch eine drahtlose Vorrichtung in einem drahtlosen Kommunikationssystem durchgeführt wird, zum Empfangen einer Direktzugriffsantwortnachricht, RAR-Nachricht, RA Msg2, von einem Netzwerkknoten, wobei das Verfahren Folgendes umfasst:
Übertragen (S11) einer ausgewählten Direktzugriffspräambel, RA Msg1, an den Netzwerkknoten, wobei die ausgewählte Präambel mit spezifischen Downlink-Ressourcen, DL-Ressourcen, verknüpft ist, die zum Kommunizieren der RAR-Nachricht, RA Msg2, von dem Netzwerkknoten an die drahtlose Vorrichtung zu verwenden sind; und
Empfangen (S13) der RAR-Nachricht, RA Msg2, von dem Netzwerkknoten auf den spezifischen DL-Ressourcen;
**dadurch gekennzeichnet, dass** die drahtlose Vorrichtung einen auf einen Bandbreitenteil bezogenen Zeitgeber, BWP-bezogenen Zeitgeber, umfasst, wobei:
- die drahtlose Vorrichtung den BWP-bezogenen Zeitgeber beim Wechseln zu einem neuen aktiven Downlink-BWP startet,
- die drahtlose Vorrichtung den BWP-bezogenen Zeitgeber erneut startet, wenn dies auf dem aktiven Downlink-BWP geplant ist, und
- die drahtlose Vorrichtung einen Standard-Downlink-BWP aktiviert, wenn der BWP-bezogene Zeitgeber abläuft, und
wobei der BWP-bezogene Zeitgeber während der Direktzugriffsprozedur weiterhin läuft, und
falls der BWP-bezogene Zeitgeber während der Direktzugriffsprozedur abläuft, die Direktzugriffsprozedur fortdauert, bis diese abgeschlossen ist,
wobei, falls der BWP-bezogene Zeitgeber abgelaufen ist und der Direktzugriff erfolgreich abgeschlossen ist, die drahtlose Vorrichtung mit einer Zurücksetzung des BWP-bezogenen Zeitgebers zu dem vor dem Initiieren der Direktzugriffsprozedur verwendeten BWP zurückkehrt,
wobei, falls der BWP-bezogene Zeitgeber abgelaufen ist und der Direktzugriff nicht erfolgreich abgeschlossen ist, die drahtlose Vorrichtung zu dem Standard-BWP wechselt.

2. Verfahren nach Anspruch 1, ferner umfassend:
Auswählen (S10) einer Direktzugriffspräambel, die zur Übertragung an den Netzwerkknoten zu verwenden ist, wobei die Direktzugriffspräambel mit spezifischen DL-Ressourcen verknüpft ist, die zum Kommunizieren der RAR-Nachricht, RA Msg2, von dem Netzwerkknoten an die drahtlose Vorrichtung zu verwenden sind.

3. Verfahren nach Anspruch 1, wobei die drahtlose Vorrichtung darüber informiert wird, welche ausgewählte Präambel zu verwenden ist.

4. Verfahren nach einem der Ansprüche 2-3, wobei die Direktzugriffspräambel aus verfügbaren Präambeln zum Direktzugriff ausgewählt wird.

5. Verfahren nach einem der Ansprüche 1-4, ferner umfassend: Überwachen (S12), auf Grundlage der ausgewählten Präambel, der entsprechenden spezifischen DL-Ressourcen auf den Empfang der RAR-Nachricht, RA Msg2.

6. Verfahren nach einem der Ansprüche 1-5, wobei die ausgewählte Direktzugriffspräambel Teil einer Präambelteilmenge verfügbarer Direktzugriffspräambeln ist und wobei die spezifischen DL-Ressourcen mit der Präambelteilmenge verknüpft sind, von der die ausgewählte Direktzugriffspräambel Teil ist.

7. Verfahren nach Anspruch 6, wobei die verfügbaren Direktzugriffspräambeln in zwei oder mehr Teilmengen unterteilt sind.

8. Verfahren nach einem der Ansprüche 6-7, wobei die verfügbaren Direktzugriffspräambeln in zwei Teilmengen, A und B, unterteilt sind und wobei die Teilmenge A zum konkurrenzbasierten Direktzugriff verwendet wird und die Teilmenge B zum konkurrenzfreien Direktzugriff verwendet wird.

9. Verfahren nach Anspruch 8, wobei die spezifischen DL-Ressourcen Ressourcen A sind, falls die ausgewählte Direktzugriffspräambel Teil der Teilmenge A ist, und Ressourcen B sind, falls die ausgewählte Direktzugriffspräambel Teil der Teilmenge B ist.

10. Verfahren nach einem der Ansprüche 8-9, wobei die spezifischen DL-Ressourcen eine gemeinsame Ressource zum konkurrenzbasierten Direktzugriff beinhalten und die spezifischen DL-Ressourcen den aktuellen aktiven Bandbreitenteil, BWP, der drahtlosen Vorrichtung zum konkurrenzfreien Direktzugriff beinhalten.

11. Verfahren nach einem der Ansprüche 1-10, wobei die spezifischen DL-Ressourcen einer oder mehrere der Folgenden sind:
ein Steuerressourcensatz CORESET,
ein Bandbreitenteil, BWP, oder
ein zu überwachender Suchraum.

12. Verfahren nach einem der Ansprüche 1-11, wobei das Verfahren zum Direktzugriff im verbundenen Zustand für eine drahtlose Vorrichtung im verbundenen Zustand durchgeführt wird.

13. Drahtlose Vorrichtung (10), die dazu konfiguriert ist, in einem drahtlosen Kommunikationssystem (100) betrieben zu werden, und zum Empfangen einer Direktzugriffsantwortnachricht, RAR-Nachricht, RA Msg2, von einem Netzwerkknoten (20) konfiguriert ist, wobei die drahtlose Vorrichtung (10) Folgendes umfasst:
- eine Kommunikationsschnittstelle (11), die zur Kommunikation mit dem Netzwerkknoten konfiguriert ist; und
- eine Verarbeitungsschaltung (12), die dazu konfiguriert ist, die drahtlose Vorrichtung (10) zu Folgendem zu veranlassen:
eine ausgewählte Direktzugriffspräambel, RA Msg1, an den Netzwerkknoten zu übertragen, wobei die ausgewählte Präambel mit spezifischen Downlink-Ressourcen, DL-Ressourcen, verknüpft ist, die zum Kommunizieren der RAR-Nachricht, RA Msg2, von dem Netzwerkknoten an die drahtlose Vorrichtung zu verwenden sind; und
die RAR-Nachricht, RA Msg2, von dem Netzwerkknoten auf den spezifischen DL-Ressourcen zu empfangen;
**dadurch gekennzeichnet, dass** die drahtlose Vorrichtung einen auf einen Bandbreitenteil bezogenen Zeitgeber, BWP-bezogenen Zeitgeber, mit den folgenden Eigenschaften umfasst:
- die drahtlose Vorrichtung startet den BWP-bezogenen Zeitgeber beim Wechseln zu einem neuen aktiven Downlink-BWP,
- die drahtlose Vorrichtung ist dazu konfiguriert, den BWP-bezogenen Zeitgeber erneut zu starten, wenn dies auf dem aktiven Downlink-BWP geplant ist, und
- die drahtlose Vorrichtung aktiviert einen Standard-Downlink-BWP, wenn der BWP-bezogene Zeitgeber abläuft, und
wobei der BWP-bezogene Zeitgeber während der Direktzugriffsprozedur weiterhin läuft, und
falls der BWP-bezogene Zeitgeber während der Direktzugriffsprozedur abläuft, die Direktzugriffsprozedur fortdauert, bis diese abgeschlossen ist,
wobei, falls der BWP-bezogene Zeitgeber abgelaufen ist und der Direktzugriff erfolgreich abgeschlossen ist, die drahtlose Vorrichtung dazu konfiguriert ist, mit einer Zurücksetzung des BWP-bezogenen Zeitgebers zu dem vor dem Initiieren der Direktzugriffsprozedur verwendeten BWP zurückzukehren, wobei, falls der BWP-bezogene Zeitgeber abgelaufen ist und der Direktzugriff nicht erfolgreich abgeschlossen ist, die drahtlose Vorrichtung dazu konfiguriert ist, zu dem Standard-BWP zu wechseln.

14. Drahtlose Vorrichtung (10) nach Anspruch 13, wobei die Verarbeitungsschaltung (12) ferner dazu konfiguriert ist, die drahtlose Vorrichtung (10) zu Folgendem zu veranlassen:
eine Direktzugriffspräambel auszuwählen, die zur Übertragung an den Netzwerkknoten (20) zu verwenden ist, wobei die Direktzugriffspräambel mit spezifischen DL-Ressourcen verknüpft ist, die zum Kommunizieren der RAR-Nachricht, RA Msg2, von dem Netzwerkknoten an die drahtlose Vorrichtung zu verwenden sind.

15. Drahtlose Vorrichtung (10) nach einem der Ansprüche 13-14, wobei die Verarbeitungsschaltung (12) ferner dazu konfiguriert ist, die drahtlose Vorrichtung (10) zu Folgendem zu veranlassen: auf Grundlage der ausgewählten Präambel spezifische DL-Ressourcen auf den Empfang der RAR-Nachricht, RA Msg2, zu überwachen.

## Revendications

1. Procédé, exécuté par un dispositif sans fil dans un système de communication sans fil, pour recevoir un message de réponse d'accès aléatoire, RAR, RA Msg2, en provenance d'un noeud de réseau, le procédé comprenant :
la transmission (S11) d'un préambule d'accès aléatoire sélectionné, RA Msg1, au noeud de réseau, le préambule sélectionné étant lié à des ressources de liaison descendante spécifiques, DL, à utiliser pour communiquer le message RAR, RA Msg2, du noeud de réseau au dispositif sans fil ; et
la réception (S13) du message RAR, RA Msg2, du noeud de réseau sur les ressources DL spécifiques ;
**caractérisé en ce que** le dispositif sans fil comprend un temporisateur lié à la partie de bande passante BWP dans lequel :
- le dispositif sans fil démarre le temporisateur lié à la BWP lors de la commutation vers une nouvelle BWP de liaison descendante active,
- le dispositif sans fil redémarre le temporisateur lié à la BWP lorsqu'il est programmé sur la BWP de liaison descendante active, et
- le dispositif sans fil active une BWP de liaison descendante par défaut lorsque le temporisateur lié à la BWP expire, et
dans lequel le temporisateur lié à la BWP continue de fonctionner pendant la procédure d'accès aléatoire, et si le temporisateur lié à la BWP expire pendant la procédure d'accès aléatoire, la procédure d'accès aléatoire continue jusqu'à ce qu'elle soit terminée, dans lequel si le temporisateur lié à la BWP a expiré et l'accès aléatoire est conclu avec succès, le dispositif sans fil revient à la BWP utilisée avant de lancer la procédure d'accès aléatoire avec une réinitialisation du temporisateur lié à la BWP,
dans lequel si le temporisateur lié à la BWP a expiré et que l'accès aléatoire est conclu sans succès, le dispositif sans fil passe à la BWP par défaut.

2. Procédé selon la revendication 1, comprenant en outre :
la sélection (S10) d'un préambule d'accès aléatoire à utiliser pour la transmission au noeud de réseau, le préambule d'accès aléatoire étant lié à des ressources DL spécifiques à utiliser pour communiquer le message RAR, RA Msg2, du noeud de réseau au dispositif sans fil.

3. Procédé selon la revendication 1, dans lequel le dispositif sans fil est informé du préambule sélectionné à utiliser.

4. Procédé selon l'une quelconque des revendications 2 et 3, dans lequel le préambule d'accès aléatoire est choisi parmi les préambules disponibles pour l'accès aléatoire.

5. Procédé selon l'une quelconque des revendications 1 à 4, comprenant en outre :
la surveillance (S12), sur la base du préambule sélectionné, des ressources DL spécifiques correspondantes pour la réception du message RAR, RA Msg2.

6. Procédé selon l'une quelconque des revendications 1 à 5, dans lequel le préambule d'accès aléatoire sélectionné fait partie d'un sous-ensemble de préambule de préambules d'accès aléatoire disponibles, et dans lequel les ressources DL spécifiques sont liées au sous-ensemble de préambule dont le préambule d'accès aléatoire sélectionné fait partie.

7. Procédé selon la revendication 6, dans lequel les préambules d'accès aléatoire disponibles sont divisés en deux sous-ensembles ou plus.

8. Procédé selon l'une quelconque des revendications 6 et 7, dans lequel les préambules d'accès aléatoire disponibles sont divisés en deux sous-ensembles, A et B, et dans lequel le sous-ensemble A est utilisé pour un accès aléatoire basé sur un conflit et le sous-ensemble B est utilisé pour un accès aléatoire sans conflit.

9. Procédé selon la revendication 8, dans lequel les ressources DL spécifiques sont des ressources A si le préambule d'accès aléatoire sélectionné fait partie du sous-ensemble A, et des ressources B si le préambule d'accès aléatoire sélectionné fait partie du sous-ensemble B.

10. Procédé selon l'une quelconque des revendications 8 et 9, dans lequel les ressources DL spécifiques comportent une ressource commune pour un accès aléatoire basé sur un conflit, et les ressources DL spécifiques comportent la partie de bande passante, BWP, active actuelle, du dispositif sans fil pour un accès aléatoire sans conflit.

11. Procédé selon l'une quelconque des revendications 1 à 10, dans lequel les ressources DL spécifiques sont une ou plusieurs parmi :
un ensemble de ressources de commande CORESET,
une partie de bande passante, BWP, ou
un espace de recherche à surveiller.

12. Procédé selon l'une quelconque des revendications 1 à 11, dans lequel le procédé est exécuté pour un accès aléatoire à l'état connecté pour un dispositif sans fil à l'état connecté.

13. Dispositif sans fil (10), configuré pour fonctionner dans un système de communication sans fil (100), et configuré pour recevoir un message de réponse d'accès aléatoire, RAR, RA Msg2, en provenance d'un noeud de réseau (20), le dispositif sans fil (10) comprenant :
- une interface de communication (11) configurée pour communiquer avec le noeud de réseau ; et
- un circuit de traitement (12) configuré pour amener le dispositif sans fil (10) :
à transmettre un préambule d'accès aléatoire sélectionné, RA Msg1, au noeud de réseau, le préambule sélectionné étant lié à des ressources de liaison descendante spécifiques, DL, à utiliser pour communiquer le message RAR, RA Msg2, du noeud de réseau au dispositif sans fil ; et
à recevoir le message RAR, RA Msg2, du noeud de réseau sur les ressources DL spécifiques ;
**caractérisé en ce que** le dispositif sans fil comprend un temporisateur associé à la partie de bande passante, BWP, dans lequel
- le dispositif sans fil est configuré pour démarrer le temporisateur associé à la BWP lors de la commutation vers une nouvelle BWP de liaison descendante active
- le dispositif sans fil est configuré pour redémarrer le temporisateur associé à la BWP lorsqu'il est programmé sur la BWP de liaison descendante active, et
- le dispositif sans fil est configuré pour activer une BWP de liaison descendante par défaut lorsque le temporisateur associé à la BWP, et
dans lequel le temporisateur associé à la BWP continue de fonctionner pendant la procédure d'accès aléatoire, et
si le temporisateur associé à la BWP expire pendant la procédure d'accès aléatoire, la procédure d'accès aléatoire se poursuit jusqu'à ce qu'elle soit terminée,
dans lequel si le temporisateur associé à la BWP a expiré et que l'accès aléatoire est terminé avec succès, le dispositif sans fil est configuré pour revenir à la BWP utilisée avant de lancer la procédure d'accès aléatoire avec une réinitialisation du temporisateur associé à la BWP,
dans lequel si le temporisateur associé à la BWP a expiré et que l'accès aléatoire est terminé sans succès, le dispositif sans fil est configuré pour passer à la BWP par défaut.

14. Dispositif sans fil (10) selon la revendication 13, dans lequel le circuit de traitement (12) est en outre configuré pour amener le dispositif sans fil (10) :
à sélectionner un préambule d'accès aléatoire à utiliser pour la transmission au noeud de réseau (20), le préambule d'accès aléatoire étant lié à des ressources DL spécifiques à utiliser pour communiquer le message RAR RA Msg2, du noeud de réseau au dispositif sans fil.

15. Dispositif sans fil (10) selon l'une quelconque des revendications 13 et 14, dans lequel le circuit de traitement (12) est en outre configuré pour amener le dispositif sans fil (10) :
à surveiller, sur la base du préambule sélectionné, des ressources DL spécifiques pour la réception du message RAR, RA Msg2.
